# EUROPÄISCHE PATENTSCHRIFT

(11) **EP 1 586 193 B1**
(45) Veröffentlichungstag und Bekanntmachung des Hinweises auf die Patenterteilung: **10.08.2011**
(21) Anmeldenummer: 03785929.5
(22) Anmeldetag: 23.12.2003
(51) Int. Cl.: H04N 5/32, H04N 5/335

(54) **KAMERA UND VERFAHREN ZUR OPTISCHEN AUFNAHME EINES SCHIRMS**
CAMERA AND METHOD FOR OPTICALLY RECORDING A SCREEN
CAMERA ET PROCEDE DE PRISE DE VUE OPTIQUE D'UN ECRAN

(30) Priorität: 20.01.2003 DE 10301941
(43) Veröffentlichungstag der Anmeldung: 19.10.2005
(73) Patentinhaber: Fraunhofer-Gesellschaft zur Förderung der angewandten Forschung e.V., 80686 München (DE)
(72) Erfinder: SCHMITT, Peter, 91058 Erlangen (DE); BEHRENDT, Rolf, 91077 Dormitz (DE); SCHMIDT, Dieter, 90489 Nürnberg (DE); KOSTKA, Günther, 91056 Erlangen (DE)
(74) Vertreter: Schoppe, Fritz
(86) Internationale Anmeldenummer: PCT/EP2003/014817
(87) Internationale Veröffentlichungsnummer: WO 2004/066612

(56) Entgegenhaltungen:
- EP-A- 0 618 719
- WO-A-99/62250
- US-A- 6 002 743
- US-A- 6 163 339

## Beschreibung

Die vorliegende Erfindung bezieht sich auf großformatige Kameras und insbesondere auf großformatige Kameras zur optischen Aufnahme eines Schirms, die ein Array von optischen Einzelkameras umfassen.

Kameras zur optischen Aufnahme eines Schirms, der beispielsweise ein Szintillatorschirm ist, werden in der digitalen Radioskopie eingesetzt.

Für die digitale Radioskopie werden gegenwärtig im wesentlichen drei Detektortypen eingesetzt. Ein erster Detektortyp verwendet einen Bildverstärker, dessen Ausgangssignal von einer optischen Kamera, beispielsweise einer CCD-Kamera, aufgezeichnet wird. Der zweite Detektortyp basiert auf einem Halbleiterdetektor, der meist aus Silizium besteht, und der das von einem auf dem Halbleiter angebrachten Szintillatorschirm erzeugte sichtbare Licht in eine elektrische Ladung umwandelt, die dann ausgelesen wird, um auf der Basis der Ladung nach entsprechender Bildverarbeitung eine Abbildung zu erreichen.

Ein dritter Detektortyp basiert auf einem Szintillatorschirm, der von einer optischen Kamera aufgenommen wird. Für hoch auflösende Anwendungen erfolgt die optische Abbildung mittels einer Faseroptik. Für Anwendungen dagegen, die ein großflächiges Bild benötigen, wird in der Regel eine Linsenoptik eingesetzt.

Der Einsatz einer Linsenoptik ist gegenüber anderen Detektortypen dahingehend nachteilhaft, daß er ungünstige Detektionseigenschaften aufweist. Dies ist auch der Grund dafür, daß der letztgenannte Detektortyp, also ein Szintillatorschirm, der mittels eines linsenoptischen Systems aufgenommen wird, nur sehr selten eingesetzt wird. Die einzigen Einsatzgebiete bestehen bei Low-Cost-Applikationen, bei denen die Lichtempfindlichkeit nicht von entscheidender Bedeutung ist bzw. bei denen eine Röntgendosis, die einem Objekt zugeführt wird, nicht von zentraler Bedeutung ist.

Die vorstehend genannten Röntgenkameras weisen je nach Detektortyp unterschiedliche Nachteile auf. So sind Bildverstärker zwar sehr empfindlich. Ihre Größe ist jedoch limitiert. Bildverstärker sind lediglich in Durchmessern bis zu ca. 25 cm verfügbar und weisen eine geringe Dynamik bezüglich Helligkeitsunterschieden auf.

Halbleiterdetektoren sind zur Zeit nur bis zu einer Größe von 40 x 40 cm erhältlich und können derzeit nur mit großem Aufwand fehlerfrei hergestellt werden. Sie liefern ferner nur geringe Bildwiederholraten. Bei den in der Regel verwendeten Halbleiterdetektoren auf der Basis von amorphem Silizium kommt als wesentlicher Nachteil ein "Nachleuchten" (Image Lag) hinzu.

Faseroptische Röntgenkameras bilden in der Regel relativ geringe Flächen ab, die typischerweise eine Fläche von nur 3 cm x 3 cm umfassen. Durch eine Anordnung von vielen faseroptischen Röntgenkameras können prinzipiell auch größere Flächen abgedeckt werden. Derartige Anordnungen sind jedoch aufwendig und teuer. Ferner entstehen zwischen den einzelnen Kameramodulen tote Zonen.

Linsenoptische Röntgenkameras können dagegen große Flächen abbilden. Nachteilig an ihnen ist jedoch, daß ihre Empfindlichkeit sehr gering ist, da bei der optischen Abbildung in der Regel sehr viel Licht verloren geht. Wenn beispielsweise ein Szintillatorschirm mit einer Größe von 40 x 40 cm² mittels einer linsenoptischen CCD-Kamera aufgenommen werden soll, die einen Lichtsensor mit einer effektiven Größe von 4 x 4 mm² umfaßt, muß die Linsenoptik der CCD-Kamera eine Verkleinerung der Schirmfläche um den Faktor 10.000 erreichen. Solchen stark verkleinernden Linsen bringen inhärent große Lichtverluste mit sich, was unmittelbar in einer geringen Lichtempfindlichkeit eines solchen Detektorsystems resultiert.

So werden beispielsweise für industrielle Anwendungen, wie sie beispielsweise bei der Qualitätskontrolle von industriell gefertigten Bauteilen, wie bei z.B. Rädern, oder in der Sicherheitstechnik auftreten, bei der größere Gegenstände durchleuchtet werden sollen, zum einen großformatige Detektorsysteme benötigt, die zum anderen schnell arbeiten sollen. Insbesondere in der Röntgen-Computertomographie werden Röntgenkameras benötigt, die das gesamte Objekt abbilden, um Geschwindigkeitseinbußen zu vermeiden. Bei großen Untersuchungsobjekten, wie z.B. Kraftfahrzeugrädern, werden bislang Teilbilder erzeugt, die durch eine zeitaufwendige Positionierung der Röntgenkamera in verschiedene Aufnahmepositionen entstehen. Dann werden die Teilbilder im Rechner zusammengesetzt.

Würden für diese Aufgabe Halbleiterdetektoren auf der Basis von amorphem Silizium eingesetzt, so kann oftmals die geforderte Schnelligkeit nicht erreicht werden, da das erwähnte Nachleuchten der Halbleiterdetektoren die nutzbare Bildwiederholfrequenz auf bis zu 1 - 2 Bilder pro Sekunde reduziert.

Da bei der Röntgencomputertomographie je nach gewünschter Auflösung mehrere 100 Röntgenbilder benötigt werden, wird die Meßzeit bei großen Objekten durch die Notwendigkeit der Zusammensetzung eines Röntgenbildes aus Teilbildern und durch die geringe Bildwiederholfrequenz so lang, daß der Einsatz solcher Detektoren für die schnelle Untersuchung von großen Objekten ausscheidet.

Wie es bereits ausgeführt worden ist, ist ein System aus Szintillatorschirm und optischer Kamera seit langem bekannt. Der Einsatz in der Praxis ist jedoch aufgrund der schlechten Detektionseigenschaften, die sich insbesondere in einer geringen Quantenausbeute (DQE) äußert, selten. Ein Grund für die geringe Quantenausbeute besteht darin, daß ein großformatiger Szintillatorschirm mit Hilfe einer Linsenoptik auf eine einzige optische Kamera abgebildet wird. Der lichtempfindliche Sensor der Kamera, die eine CCD-Kamera sein kann, hat eine Kantenlänge von in der Regel nur wenigen Millimetern. Je größer das Format des abzubildenden Szintillatorschirms ist, desto stärker muß die Optik das Bild verkleinern, und desto mehr Licht geht durch die Abbildung verloren. In der Szintillatorschicht erzeugen Röntgenquanten je nach Energie eine bestimmte Anzahl von Lichtquanten. Eine optimale Quantenausbeute erhält man, wenn auf dem optischen Sensor für jedes Röntgenquant so viel Licht ankommt, daß die vom Licht erzeugte Ladungsmenge auf dem Sensor größer als das elektronische Rauschen der optischen Kamera ist. Da mit zunehmender optischer Verkleinerung immer mehr Licht verloren geht, ist dieser Aufbau nachteilhaft.

Um großformatige Szintillatorschirme abbilden zu können, wurde vorgeschlagen, einen einzigen Szintillatorschirm mit vier einzelnen CCD-Kameras abzubilden. Dieses Konzept findet sich im System mit der Bezeichnung Paladio der Firma Leti. Dieses System umfaßt ein spezielles Modul für die Rekonstruktion eines Bildes, das aus vier Einzelbildern von vier verschiedenen Einzelkameras zusammengesetzt wird, um die Rekonstruktionsdauer zu optimieren. Dieses Modul umfaßt ferner Operationen für Einstellungen der Bilder bezüglich der Verstärkung, eines Offsets und auch hinsichtlich einer Einstellung geometrischer Verzerrungen.

Das einfache Zusammensetzen eines Gesamtbildes aus Einzelbildern ist jedoch dahingehend nachteilhaft, daß zwar bestimmte Einstellungen an den Einzelbildern vor dem Zusammensetzen vorgenommen werden können, daß jedoch die Kanten der Einzelbilder im Gesamtbild typischerweise sichtbar bleiben. So ergeben sich deutlich sichtbare Kanten, die beispielsweise dann zu Artefakten und Fehlauswertungen führen, wenn ein solchermaßen zusammengesetztes Gesamtbild einer Bildverarbeitung unterzogen wird, um beispielsweise Kanten in dem Bild automatisch zu detektieren. Diese Problematik stellt sich insbesondere bei der Anwendung der Röntgentechnik in einem industriellen Umfeld, bei dem z.B. Lufteinschlüsse oder Fremdkörper allgemein in einem Prüfobjekt, wie z.B. einem Kraftfahrzeugrad, herausgefunden werden müssen, um festzustellen, ob ein solches Objekt die geltenden Spezifikationen noch erfüllt oder nicht.

Insbesondere in einem Umfeld, bei dem große Objekte in "einem Schuß" und mit hoher Wiederholfrequenz abgebildet werden sollen, könnte durch den Einsatz von mehr als vier Einzelkameras eine Preisreduktion des Systems erreicht werden. Dies liegt daran, daß die Kosten für CCD-Kameras deutlich überproportional mit Zunahme der effektiven Fläche des Bildsensors ansteigen.

Das US-Patent Nr. 6,002,743 offenbart eine Vorrichtung und ein Verfahren zur Bilderfassung von einer Mehrzahl von Kameras. Mehrere Kameras oder Bildsensoren werden in einem Kamera-Array angeordnet. Die Kameras sind in Zeilen und Spalten angeordnet, so dass ein Betrachtungsbereich jeder Kamera mit einem Betrachtungsbereich einer benachbarten Kamera überlappt. Die insgesamte Auflösung des durch alle Kameras gemeinsam erzeugten Bildes wird durch die Menge und Dichte der Platzierung der Kameras bestimmt. Die Auflösung oder der Kontrast können erhöht werden, indem der Prozentsatz der Überlappung der mehreren Kameras oder Sensoren, die alle auf den selben Objektbereich gerichtet sind, oder auf einen Abschnitt des selben Objektbereichs gerichtet sind, erhöht wird. Ein Binning der Pixel der Kameras kann an der Kamera oder in der Software des Systems durchgeführt werden. Das Binning wird verwendet, um die Empfindlichkeit der einzelnen Kameras exponentiell zu erhöhen. Ferner muss das System zunächst kalibriert werden. Hierzu wird bei einer manuellen Kalibrierung des Systems ein geometrisches Testmuster vor das Kamera-Array platziert. Jede Kamera wird auf Sub-Pixel-Level unter Verwendung des geometrischen Testmusters ausgerichtet. Hierauf wird ein Graustufentestmuster vor das Kamera-Array platziert. Dann wird belichtet. Ein Softwareprogramm kompensiert dann Graustufenabweichungen und lädt anschließend diese Korrekturen in einen Systemspeicher.

Die Aufgabe der vorliegenden Erfindung besteht darin, ein Konzept zur optischen Aufnahme eines Schirms zu schaffen, das für großformatige Aufnahmen geeignet ist, das eine hohe Lichtempfindlichkeit aufweist, und das ferner Bilder liefert, die für eine automatische Bildverarbeitung geeignet sind.

Diese Aufgabe wird durch eine Kamera gemäß Anspruch 1 oder ein Verfahren zur optischen Aufnahme eines Schirms nach Anspruch 18 gelöst.

Der vorliegenden Erfindung liegt die Erkenntnis zugrunde, daß eine Kamera mit einem Array von optischen Einzelkameras, von denen jede eine Teilfläche des abzubildenden Schirms abbildet, dann sowohl eine hohe Lichtempfindlichkeit liefert als auch gleichzeitig Ausgangsbilder liefert, die für eine automatische Bildweiterverarbeitung geeignet sind, wenn die Korrektur der digitalen Einzelbilder bei einer Auflösung durchgeführt wird, die höher als die Auflösung ist, die letztendlich die optische Aufnahme der Kamera haben soll. Dieses Konzept ist einerseits dahingehend vorteilhaft, daß normal erhältliche Einzelkameras arraymäßig angeordnet werden können, ohne daß bestimmte Modifikationen an den Kameras beispielsweise zur Auflösungsreduktion, vorgenommen werden müssen. Das durch die Einzelkameras erhaltene Array von Einzelbildern wird dann auf einer höheren Auflösung, die durch den Einsatz üblicher Einzelkameras ohnehin erhalten wird, bereits einer Korrekturverarbeitung unterzogen, um die durch die Einzelkameras erhaltenen Einzelbilder untereinander zu justieren und gegebenenfalls vorhandene Überlappungsbereiche zu eliminieren. Aus dem Ergebnis der Korrektur einschließlich einer gegebenenfalls vorhandenen Überlappungsbereicheliminierung wird dann ein Gesamtbild mit einer für die Korrektur verwendeten Auflösung erhalten, die höher als die letztendlich benötigte Auflösung ist. Dieses Gesamtbild mit hoher Auflösung kann durchaus Kanten an den Grenzen der einzelnen Teilbilder aufweisen.

Zur Kanten- und Auflösungsreduktion wird dann eine Nachverarbeitung des Gesamtbilds dahingehend durchgeführt, daß benachbarte Pixel beispielsweise durch Addition miteinander kombiniert werden. Die Anzahl von miteinander kombinierten Pixeln hängt von dem Verhältnis der Korrekturauflösung zur letztendlich benötigten Gesamtauflösung ab und kann von Fall zu Fall variieren. Die Zusammenfassung benachbarter Pixel nach der Korrektur führt jedoch dazu, daß die noch im Bild hoher Auflösung sichtbaren Kanten bei Übergang von einem Einzelbild zu einem anderen Einzelbild unsichtbar werden, so daß schließlich ein Gesamtbild mit einer erwünschten Gesamtauflösung erhalten wird, das in seiner Datenmenge gut handhabbar ist, und das ferner keine oder nur kaum sichtbare Kanten mehr an der Grenze von einem Teilbild zum nächsten Teilbild hat. Das letztendlich erhaltene Gesamtbild ist somit für eine nachfolgende Bildverarbeitung aufgrund der Kantenfreiheit einerseits und der reduzierten Datenmenge andererseits gut geeignet.

Bei einem bevorzugten Ausführungsbeispiel der vorliegenden Erfindung werden als Einzelkameras CCD-Kameras eingesetzt, die die Möglichkeit des sogenannten "Binnings" erlauben. Hierbei wird bereits vor oder während des Auslesens des CCD-Sensors eine gewissermaßen analoge Ladungsaddition benachbarter Zeilen bzw. Spalten durchgeführt, die besonders günstig ist, da diese Addition nicht durch ein elektronisches Rauschen beeinträchtigt wird, das auftreten würde, wenn das Binning nach Auslesen und Analog/Digital-Wandeln digital durchgeführt werden würde.

Ein solches digitales Kombinieren benachbarter Pixel wird lediglich nach Anwendung der Korrekturvorschriften für die einzelnen Einzelbilder ausgeführt, um die letztendliche Auflösungsreduktion und Kanteneliminierung zu erreichen.

Das erfindungsgemäße Konzept ermöglicht somit den Einsatz üblicher kleinflächiger CCD-Kameras mit einer nur gering verkleinernden Linsenoptik, so daß im Vergleich zum Einsatz einer einzigen CCD-Kamera mit stark verkleinernder Linsenoptik zwei Empfindlichkeitsvorteile erreicht werden. Zum einen wird der Lichtverlust in der nur schwach verkleinernden Linsenoptik wesentlich geringer sein als in der stark verkleinernden Linsenoptik. Zum anderen wird ein zusätzlicher Empfindlichkeitsvorteil durch das analoge Binning bzw. durch die digitale Kombination benachbarter Pixel nach der Korrektur erhalten.

Aufgrund der Einsatzmöglichkeit von CCD-Sensoren oder auch nur CMOS-Bildsensoren erlaubt das erfindungsgemäße Konzept Bildwiederholfrequenzen für großflächige Aufnahmen, die bis zu einem Faktor 1000 höher sind als die Wiederholfrequenzen, die mit amorphen Siliziumdetektoren für ähnliche Bildformate erreicht werden können.

Zur Korrektur/Justage der Einzelbilder werden für jede Einzelkamera eigens bestimmte Korrekturvorschriften verwendet. Diese Korrekturvorschriften müssen jedoch nur einmal, beispielsweise vor der Auslieferung einer erfindungsgemäßen Kamera, bestimmt werden und bleiben dann, wenn die Justage der einzelnen Kameras nicht verändert wird, immer gleich. Solche Korrekturvorschriften beispielsweise in der Form von Nachschlagtabellen, etc. können ohne weiteres fest verdrahtet werden und allgemein gesagt sehr effizient beispielsweise mittels eines DSP ausgeführt werden, da es sich lediglich um einfache Pixelverschiebungen/Sortierungen handelt, die im Hinblick auf ihren benötigten Rechenaufwand unproblematisch sind.

Bei einem bevorzugten Ausführungsbeispiel der vorliegenden Erfindung wird die erfindungsgemäße Kamera im Strahlengang der Röntgenstrahlen hinter der Szintillatorschicht plaziert, um kurzbrennweitige Objektive einsetzen zu können, die mit höherer Lichtstärke verfügbar sind als die ansonsten erforderlichen langbrennweitigen Objektive. Solche langbrennweitigen Objektive werden dann benötigt, wenn eine Kamera nicht im Strahlengang der Röntgenstrahlen plaziert wird, sondern unter Verwendung einer Spiegeloptik außerhalb der Röntgenstrahlen, um die optische Kamera vor den Röntgenstrahlen zu schützen.

Erfindungsgemäß wird zum Schutz der Kamera vor Röntgenstrahlen, die durch den Szintillatorschirm hindurchtreten, bei einem bevorzugten Ausführungsbeispiel eine Schutzscheibe beispielsweise aus Bleiglas eingesetzt, die ferner beheizbar ausgeführt ist, um Beeinträchtigungen des Bleiglases durch Röntgenstrahlen, insbesondere härtere Röntgenstrahlung, entgegenzuwirken.

Bevorzugte Ausführungsbeispiele der vorliegenden Erfindung werden nachfolgend bezogen auf die beiliegenden Zeichnungen detailliert erläutert. Es zeigen:
- Fig. 1: ein Blockschaltbild einer erfindungsgemäßen Kame- ra zur optischen Aufnahme eines Schirms;
- Fig. 2: eine schematische Darstellung einer Aufteilung des Schirms in Teilflächen, wobei ferner Überlap- pungsbereiche der Einzelbilder eingezeichnet sind;
- Fig. 3: eine schematische Darstellung der Entwicklung der Bildauflösung von der Aufnahme der Einzelbilder bis zur Ausgabe einer Aufnahme mit vorbestimmter Gesamtauflösung.
- Fig. 4a: eine Gegenüberstellung eines unkorrigierten Einzelbildes und eines korrigierten Einzelbildes bei vertikaler Korrektur;
- Fig. 4b: eine Gegenüberstellung eines unkorrigierten Ein- zelbildes und eines korrigierten Einzelbildes bei horizontaler Korrektur;
- Fig. 4c: eine Gegenüberstellung eines unkorrigierten Ein- zelbildes und eines korrigierten Einzelbildes bei rotatorischer Korrektur;
- Fig. 4d: eine Gegenüberstellung eines unkorrigierten Ein- zelbildes und eines korrigierten Einzelbildes bei einer Skalierungskorrektur;
- Fig. 5: ein Flußdiagramm des erfindungsgemäßen Verfahrens zum Kalibrieren der Kamera; und
- Fig. 6: eine Darstellung eines Gesamtszenariums bei der digitalen Radioskopie, in dem die erfindungsgemä- ße Kamera einsetzbar ist.

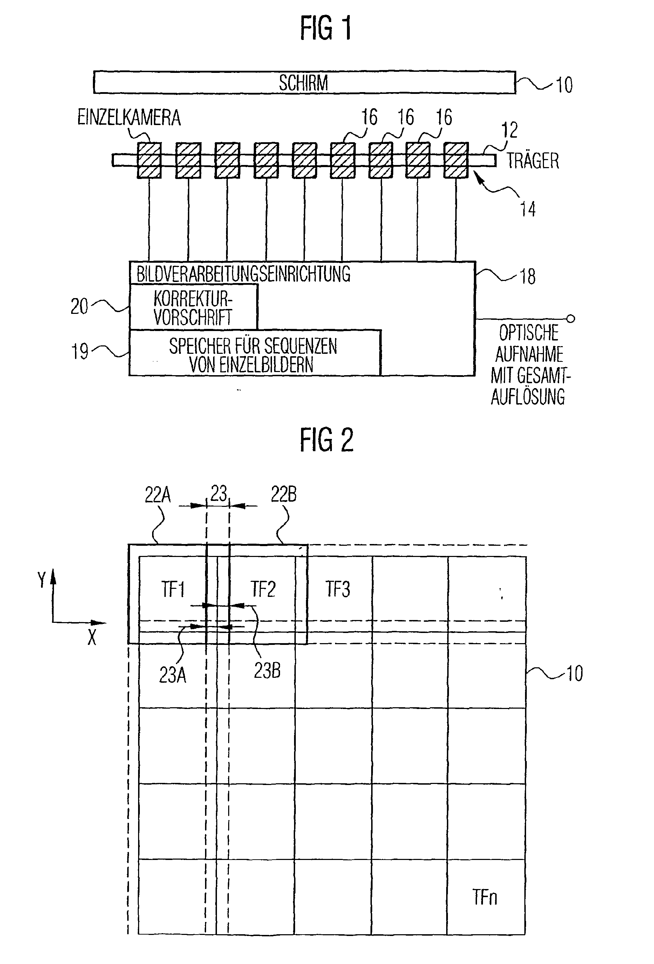

Fig. 1 zeigt ein schematisches Blockschaltbild einer erfindungsgemäßen Kamera zur optischen Aufnahme eines Schirms 10, wobei der Schirm eine Schirmfläche aufweist, und wobei für die optische Aufnahme eine vorbestimmte Gesamtauflösung vorgesehen ist.

Die Kamera umfaßt einen Kameraträger 12 mit einem Array von Kamerabefestigungen 14. Die Kamerabefestigungen sind ausgebildet, um in einer Kamerabefestigung eine Einzelkamera 16 befestigen zu können. Vorzugsweise ist der Kameraträger 12 als Platte mit in einem vorbestimmten Muster angeordneten Bohrungen ausgebildet, wobei an jeder Bohrung z.B. eine Justierschraube vorgesehen ist, um eine zylindrische Kamera, deren Durchmesser etwas kleiner als der Durchmesser der Bohrung ist, in die Bohrung einzusetzen und mittels der Justierschraube zu justieren. Alternative Möglichkeiten sind denkbar, beispielsweise Kameraträger mit leicht konischen Bohrungen, um Einzelkameras mit einem leicht konischen Außendurchmesser in den konischen Bohrungen zu plazieren, so daß keine Justierschrauben oder sonstige Befestigungen nötig sind, da lediglich der Einpreßdruck der Kamera in den Kameraträger ausreichend ist.

Die Kamera umfaßt ein Array von optischen Einzelkameras 16, wobei jede optische Einzelkamera an einer zugeordneten Kamerabefestigung 14 fest angebracht ist. Jede Einzelkamera umfaßt ferner einen Lichtsensor und eine Optikabbildungseinrichtung, wobei der Lichtsensor und die Optikabbildungseinrichtung wirksam sind, um eine Teilfläche der Srhirmfläche mit einer Einzelauflösung aufzunehmen, wobei die Einzelauflösung höher als die Gesamtauflösung der insgesamten optischen Aufnahme des Schirms 10 ist. Jede Einzelkamera 16 liefert somit ein Einzelbild mit einer höheren Auflösung als der am Ende für das Gesamtbild, das aus den Einzelbildern zusammengesetzt wird, gewünschten Auflösung.

An dieser Stelle sei darauf hingewiesen, dass Optikanordnungen beliebig umgesetzt werden können. Aus Kostengründen wird als Optikanordnung eine Linsenanordnung bevorzugt, die je nach Ausführung eine oder mehrere Linsenumfassen kann. Alternative Optikanordnungen, d. h. optische Abbildungseinrichtungen, umfassen Spiegelanordnungen, Fiberoptiken, etc. oder auch eine Kombination verschiedener optischer Abbildungseinrichtungen.

Die erfindungsgemäße Kamera umfaßt ferner eine Bildverarbeitungseinrichtung 18 zum Bearbeiten der digitalen Einzelbilder des Arrays von optischen Einzelkameras 16, um die optische Aufnahme des Schirms mit der vorbestimmten Gesamtauflösung zu erzeugen. Im einzelnen ist die Bildverarbeitungseinrichtung 18 wirksam, um die digitalen Einzelbilder einer Korrektur zu unterziehen, um Ausrichtungsungenauigkeiten und/oder Parameterschwankungen in dem Array von optischen Einzelkameras 16 zu reduzieren und vorzugsweise komplett zu eliminieren. Für die Korrektur eines Einzelbildes wird eine bei einer Kalibrierung, die einer Aufnahme vorausgeht, bestimmte Korrekturvorschrift 20 verwendet, die typischerweise in der Bildverarbeitungseinrichtung 18 auf einem geeigneten Speichermedium abgespeichert ist oder sogar fest verdrahtet ist. Erfindungsgemäß findet die Korrektur mit der bei der Kalibrierung bestimmten Korrekturvorschrift bei einer Korrekturauflösung statt, die höher als die vorbestimmte Gesamtauflösung der am Ende gewünschten optischen Gesamtaufnahme ist, und die niedriger oder gleich der Einzelauflösung ist, mit der die optischen Einzelkameras die Einzelbilder liefern. Die Bildverarbeitungseinrichtung 18 ist schließlich wirksam, um korrigierte Einzelbilder oder ein korrigiertes Gesamtbild zu erhalten. Das Zusammensetzen der Einzelbilder zu dem Gesamtbild kann somit nach der Korrektur der Einzelbilder mit den für jedes Einzelbild, d.h. für jede Einzelkamera bestimmten Korrekturvorschrift 20 vor dem abschließenden Pixelkombinationsschritt stattfinden oder nach dem abschließenden Pixelkombinationsschritt. Aus Effizienz- und Qualitätsgründen wird es jedoch bevorzugt, zunächst das Gesamtbild mit der hohen optischen Auflösung nach der Korrektur der Einzelbilder zusammenzusetzen und dann anhand des zusammengesetzten Gesamtbildes benachbarte Pixel zu addieren, um die optische Aufnahme mit der vorbestimmten Gesamtauflösung zu erhalten. Der abschließende Schritt der Kombination benachbarter Pixel wird somit durchgeführt, um das Gesamtbild, das mit der hohen Korrekturauflösung vorliegt, auf die niedrigere gewünschte vorbestimmte Gesamtauflösung zu bringen. Dieser abschließende Schritt hat, da er bereits mit korrigierten Einzelbildern vorgenommen wird, den Vorteil, daß eventuelle Artefakte an Grenzen der korrigierten Einzelbilder verwischt und damit unkenntlich gemacht werden, und daß ferner eine Auflösungsreduktion stattfindet, um kein Gesamtbild mit einer zu hohen Auflösung zu erhalten. Bilder mit zu hoher Auflösung sind für eine Weiterverarbeitung aufgrund ihrer hohen Datenmenge unhandlich. Außerdem wird für viele Anwendungen eine extrem hohe Auflösung nicht benötigt, so daß ohne weiteres eine Auflösungsreduktion stattfinden kann.

Erfindungsgemäß wird ausgenutzt, daß durch den Einsatz mehrerer Kameras die zur Verfügung stehenden Bildelemente (Pixel) proportional zur Anzahl der Kameras wächst. Häufig wird jedoch, wie es ausgeführt worden ist, keine größere Pixelanzahl benötigt, als diejenige, die eine einzige Kamera liefern würde. Werden nunmehr beispielsweise vier optische Kameras eingesetzt, können in diesem Fall jeweils vier Pixel aufaddiert werden. Besonders vorteilhaft ist dies, wenn die Ladung bereits auf dem Sensor aufaddiert werden kann, wie es bei CCD-Sensoren durch das sogenannte Binning geschieht. In diesem Fall muß die Ladung nur einmal elektronisch ausgelesen werden, und es entsteht somit nur einmal das durch diesen Vorgang erzeugte elektronische Rauschen, so daß das insgesamte Signal/Rausch-Verhältnis besser ist, als wenn jedes Pixel einzeln ausgelesen wird und digital addiert wird. Im vorliegenden Fall der 4 x 4 Situation kann die Korrektur entweder bei der höchsten Auflösung stattfinden, also ohne daß ein Binning durchgeführt worden ist. Alternativ könnte jedoch bereits ein 2 x 2-Binning durchgeführt werden, um die Korrektur bei einer vierfachen Auflösung bezüglich der gewünschten Gesamtauflösung durchzuführen. Hierbei wäre dann ein abschließender Auflösungsreduktionsschritt durch digitales Kombinieren benachbarter Pixel beispielsweise durch Addition möglich, wobei immer 2 x 2 Pixel, also vier benachbarte Pixel zusammengefaßt werden, und zwar gemäß einer bestimmten Kombinationsvorschrift, die entweder überlappend zusammenfassen kann, oder aneinander angrenzend zusammenfassen kann oder auf irgendeine andere Art und Weise eine Pixelkombination benachbarter Pixel erreicht. Damit ist eine optimal genaue Korrektur bei hoher Auflösung möglich und ist gleichzeitig aufgrund der Auflösungsreduktion nach der Korrektur eine Unterdrückung von Artefakten wegen Einzelbilder-Kanten erreicht.

Die vorzugsweise als Röntgenkamera eingesetzte erfindungsgemäße Kamera umfaßt in diesem Fall einen Szintillatorschirm, in dem Röntgenlicht in sichtbares Licht gewandelt wird. Hinter dem Szintillatorschirm 10 befindet sich, wie es in Fig. 1 gezeigt ist, die erfindungsgemäße Kamera mit dem Array von Einzelkameras 16, wobei jede jeweils einen Teil des Szintillatorschirms abbildet. Für spezielle Aufgaben, bei denen gewöhnlich eine Zeilenkamera eingesetzt wird, degeneriert das Array von optischen Einzelkameras zu einem eindimensionalen Array, daß eine lineare Anordnung optischer Einzelkameras umfaßt. Die von den einzelnen optischen Kameras abgebildeten Bereiche können entweder unmittelbar aneinander angrenzen oder überlappen sich geringfügig, um den Justage-Aufwand der typischerweise auf mechanischer Seite anfallen würde, zu reduzieren.

Haben die Teilbilder bzw. Einzelbilder eine Überlappung, so kann eine elektronische Korrektur durchgeführt werden, wie es später erläutert werden wird. Bei Überlappung der Teilbilder wird insbesondere der in beiden Kameras abgebildete Bereich nach dem Auslesen der einzelnen optischen Kameras verworfen, und die optische Gesamtaufnahme wird nach der Korrektur, die dann auch ein Verwerfen des Überlappungsbereichs umfaßt, aus den korrigierten und einer Verwerfung unterzogenen Einzelbildern zusammengesetzt und Auflösungsreduziert.

Fig. 2 zeigt eine schematische Anordnung des Schirms 10 in der Draufsicht, wobei der Schirm in, wie es in Fig. 2 gezeigt ist, beispielsweise 25 Teilflächen TF 1, TF 2, TF 3, ... TF n aufgeteilt ist. Es ist offensichtlich, daß eine beliebige Aufteilung des Schirms 10 in Teilflächen vorgenommen werden kann. Bevorzugte Anzahlen von Teilflächen liegen über 10 Teilflächen und speziell im Bereich von größer oder gleich 25 Teilflächen.

Im einzelnen sind die von den einzelnen Einzelkameras 16 erzeugten Einzelbilder in Fig. 2 mit 22a, 22b, ... bezeichnet. Ferner sind in Fig. 2 auch Überlappungsbereiche eingezeichnet. Die Einzelbilder 22a, 22b, die von den beispielsweise von den ersten Einzelkameras links in Fig. 1 erzeugt werden, haben eine Fläche, die größer ist als die Fläche der schließlich erhaltenen Teilflächen (TF 1, TF 2), die letztendlich zum Gesamtbild zusammengesetzt werden. So ist das Einzelbild 22a in Fig. 2 aus dem letztendlich die Teilfläche TF 1 entstehen wird, dick umrandet eingezeichnet. Bei der in Fig. 2 gezeigten idealisierten Darstellung ist die Form des Einzelbildes 22a ein Rechteck, das eine größere Fläche als das Rechteck hat, das die Teilfläche TF 1 darstellt, wobei alle vier Seiten des Einzelbildes 22a außerhalb der Begrenzungslinien der Teilfläche TF 1 liegen, so daß die Teilfläche TF 1, die nach der Korrektur aus dem Einzelbild 22a erzeugt wird, vollständig innerhalb des Einzelbildes 22a liegt. Entsprechend ist auch das Einzelbild 22b in Fig. 2 eingezeichnet, aus dem letztendlich die Teilfläche TF 2 erzeugt wird. Die Einzelbilder 22a, 22b haben einen Überlappungsbereich 23, in dem sich die Einzelbilder überlappen. Der Überlappungsbereich umfaßt einen Teil der Teilfläche TF 1 und einen Teil der Teilfläche TF 2. Bei der Überlappungsbereich-Eliminierung durch die Bildverarbeitungseinrichtung 18 gemäß der abgespeicherten Korrekturvorschrift wird aus dem Einzelbild 22a der Teilbereich des Überlappungsbereichs 23, der außerhalb der Teilfläche TF 1 liegt und sich in die Teilfläche TF 2(und auch in die anderen benachbarten Teilflächen erstreckt), eliminiert. Entsprechend wird mit dem Einzelbild 22b verfahren, um das korrigierte Einzelbild 22b zu erzeugen, daß letztendlich die Teilfläche TF 2 darstellt.

Allgemein gesagt ist auch bei einer parallelen Anordnung der lichtempfindlichen Sensoren der optischen Kamera zu erwarten, daß die Zeilen bzw. Spalten der lichtempfindlichen Sensoren nicht exakt parallel zueinander angeordnet sind, da der lichtempfindliche Teil des Sensors in der Regel nicht exakt parallel zur Berandung des Sensorgehäuses angeordnet ist. Zur Justage der einzelnen Sensoren werden verschiedene Möglichkeiten je nach Anwendung bevorzugt.

Gemäß einem ersten Ausführungsbeispiel der vorliegenden Erfindung wird noch eine mechanische Korrektur dahingehend vorgenommen, daß die optischen Kameras drehbar in dem Kameraträger 12 (Fig. 1) angeordnet werden. Hier könnte beispielsweise jede Kamera als Zylinder ausgeführt werden. Die einzelnen Kameras werden dann drehbar gelagert in Matrixform angeordnet. Die Justage der einzelnen Kameras erfolgt beispielsweise bei maximaler Auflösung der optischen Kamera durch Drehen der Kamera und Beobachtung des Kamerabildes. Zu diesem Zweck wird beispielsweise eine Anordnung aus parallelen Linien als Kalibriermuster abgebildet. Alle Kameras werden so justiert, daß jede Linie exakt parallel zu einer Zeile bzw. Spalte des Sensors liegt. Nach Justage, die durch mechanisches Beeinflussen der Einzelkameras und anschließende Justierung zum Beispiel mittels einer Justierschraube oder mittels Eindrücken der Kameras in einen konischen Träger stattfindet, wird typischerweise nur noch ein vertikaler bzw. horizontaler Offset vorhanden sein. Dieser vertikale bzw. horizontale Offset wird sich darin äußern, daß eine auf dem Kalibriermuster sich über mehrere Teilflächen erstreckende parallele Linie, die sich beispielsweise über die gesamte Zeile des Schirms 10 erstreckt, die durch die Teilfläche TF 1, die Teilfläche TF 2 und die Teilfläche TF 3 definiert ist, in den korrigierten Einzelbildern zwar als stückweise parallele Linie abgebildet sein wird, wobei die einzelnen Linien jedoch in y-Richtung noch zueinander verschoben sind. Dies bedeutet, daß eine abgebildete horizontale Linie im Einzelbild 22a auf der rechten Seite des Einzelbildes 22a auf einer anderen y-Position aufhört als eine Linie im Einzelbild 22b für die Teilfläche TF 2 beginnt. Darüber hinaus könnte im Hinblick auf einen x-Offset die Linie im Einzelbild 22a bereits vor dem Ende des Überlappungsbereichs 23 in der Teilfläche TF 2 aufhören und entsprechend könnte die Linie im Einzelbild 22b vor der Begrenzung des Überlappungsbereichs 23 im Einzelbild 22a beginnen.

Nachdem zu diesem Zeitpunkt noch die Überlappungsbereiche der Einzelbilder vorhanden sind, können der vertikale und der horizontale Offset ebenfalls manuell oder elektronisch korrigiert werden. Dies kann einfach auf Grund des Überlappungsbereichs vorgenommen werden. Beim Betrachter kann dann ein x- oder ein y-Offset für entsprechende Kameras, die die Einzelbilder 22a, 22b erzeugen, einstellen und diesen Offset so lange variieren, bis sich die Kalibrierlinie bzw. die entsprechenden Kalibrierpunkte im Überlappungsbereich exakt überlappen. Der gefundene x- bzw. y- Offset wird dann für jedes Einzelbild, d.h. für jede Einzelkamera in der Bildverarbeitungseinrichtung fest einprogrammiert und dient während eines normalen Betriebs als die in der Bildverarbeitungseinrichtung 18 abgespeicherte Korrekturvorschrift 20 (Fig. 1). In anderen Worten ausgedrückt findet der x-Offset bzw. der y- Offset dadurch statt, daß ganze Zeilen bzw. Spalten des Überlappungsbereichs 23 verworfen werden, dahingehend, daß für eine Kamera mehr Zeilen verworfen werden, so daß dieselbe einen anderen y- Offset hat als eine andere Kamera, bei der weniger Zeilen des Überlappungsbereichs verworfen werden, was in einem anderen y-Offset resultiert, also in einer anderen Korrekturvorschrift für diese Einzelkamera 16 (Fig. 1).

Alternativ können die lichtempfindlichen Sensoren der einzelnen optischen Kameras so weit als möglich parallel zueinander angeordnet werden, da davon ausgegangen werden kann, daß die einzelnen Kameras schon eine relativ gute rotatorische Ausrichtung bezüglich der optischen Achse der Sensoren haben. Anschließend werden wieder parallele Linien abgebildet. Sind einzelne Sensoren gegeneinander verdreht, werden die Teilbilder in nicht-parallele Linien abgebildet. Vielmehr werden die Linien unter einem Winkel zu den Zeilen bzw. Spalten der lichtempfindlichen Sensoren verlaufen. In diesem Fall wird für jeden Sensor der Winkel zwischen den abgebildeten Linien und den Zeilen bzw. Spalten des Sensors bestimmt. Die einzelnen Pixel (Bildelemente) der lichtempfindlichen Sensoren werden nach Auslesen der einzelnen optischen Kameras durch eine Recheneinheit so umsortiert, daß im Gesamtbild wieder durchgehende parallele Linien entstehen, was in eine Drehung des Bildes resultiert.

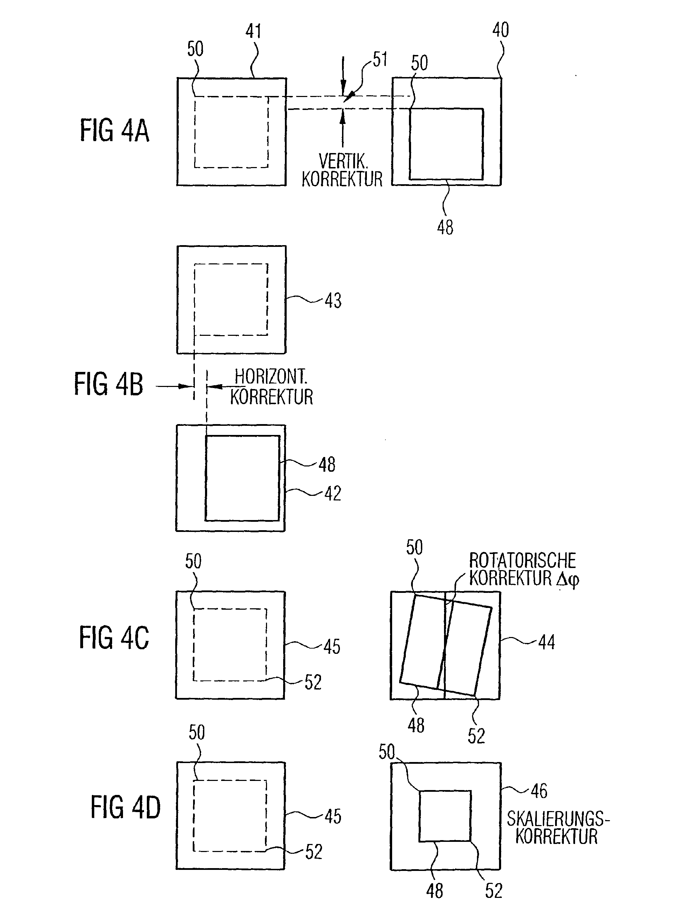

Die rotatorische elektronische Korrektur, die also in einer Adressumsortierung der Pixel resultiert, die beispielsweise mittels einer Nachschlagtabelle für jede Einzelkamera fest einprogrammiert werden kann, kann ferner noch und wird auch typischerweise noch mit der vertikalen bzw. horizontalen Korrektur kombiniert werden, welche oben beschrieben worden ist, und welche später noch bezugnehmend auf die Figuren 4a, 4b, 4c, 4d näher erläutert wird.

Nachfolgend wird auf bevorzugte Auslegungen für die Szintillatorschicht eingegangen. Die Auflösung eines Szintillators nimmt mit zunehmender Dicke des Szintillators ab. Das heißt, dass dünnere Szintillatoren eine höhere Auflösung haben aber auch mehr kosten als dickere Szintillatoren. Andererseits nimmt bei dünneren Szintillatoren auch die Röntgenstrahlenabsorption ab. Dies hat zwei inhärente Problematiken. Die eine besteht darin, dass der Quantenwirkungsgrad fällt. Die andere besteht darin, dass weniger Röntgenstrahlen absorbiert werden und damit ein höherer Aufwand zum Schutz der Kameras und zum Schutz von in der Nähe befindlichen Bedienpersonen getrieben werden muß. Auslegungsvorschriften für den Szintillator lauten daher dahingehend, dass ein möglichst dicker Szintillator genommen werden muß, dessen Auflösung für eine Anwendung gerade noch ausreicht. Dann ist ein optimaler Kompromiss zwischen Kosten und Quantenwirkungsgrad erreicht. Bei einem bevorzugten Ausführungsbeispiel wird daher ein Szintillator verwendet, dessen Auflösung die letztendlich erwünschte Gesamtauflösung, die erst nach der Korrektur vorliegt, höchstens gering übersteigt, der also eine Auflösung hat, die um z. B. 10 % über der Gesamtauflösung liegt und vorzugsweise gleich der Gesamtauflösung ist. Für die Kalibrierung der Kamera spielen diese Überlegungen keine Rolle, da dort auf der Höhe des Szintillators statt demselben ein Kalibriermuster z. B. aus Papier oder Karton eingefügt wird, das mit prinzipiell nahezu beliebig hoher Auflösung gefertigt werden kann.

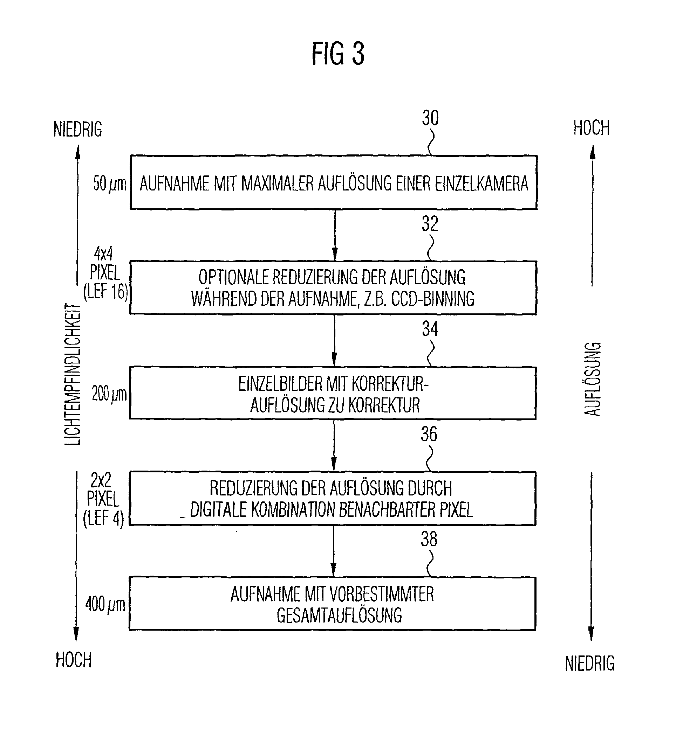

Nachfolgend wird bezugnehmend auf Fig. 3 dargelegt, welche verschiedenen Auflösungen durch die in Fig. 1 dargestellte erfindungsgemäße Kamera von der Aufnahme der Einzelbilder bis zur Ausgabe der optischen Aufnahme mit vorbestimmter Gesamtauflösung des Gesamtschirms verwendet werden. Zunächst findet in einem Schritt 30 eine Aufnahme des Schirms mit maximaler Auflösung einer Einzelkamera statt. Nachdem im Vergleich zur endgültigen optischen Gesamtaufnahme mit einer einzigen Kamera und stark verkleinernder Optik viele Einzelkameras verwendet werden, wird eine sehr hohe Auflösung durch die Einzelbildaufnahmen, d.h. durch die Einzelkameras erreicht. Eine typische Auflösung ist eine Linienauflösung von 50 µm. Gleichzeitig mit der hohen Auflösung wird jedoch eine geringe Lichtempfindlichkeit erreicht. In dem Schritt 32 kann optional die Auflösung bereits reduziert werden, indem ein analoges Binning durchgeführt wird, beispielsweise wenn CCD-Lichtsensoren als Lichtsensoren der Einzelkameras 16 (Fig. 1) eingesetzt werden. Für das beschriebene Beispiel wird ein 4 x 4 Binning eingesetzt, was einer Erhöhung der Lichtempfindlichkeit um einen Lichtempfindlichkeitsfaktor von 16 entspricht. Gleichzeitig wird die Pixelfläche, also die durch ein Pixel dargestellt geometrische Fläche, um das 16fache erhöht. Hierauf entstehen Einzelbilder mit einer Korrekturauflösung, mit denen dann die erfindungsgemäße Ausrichtungskorrektur 34 durchgeführt werden kann. Eine für die Korrektur bevorzugte Linienauflösung liegt typischerweise bei 200 µm.

Durch Durchführung der Offset-Korrektur bei hoher Auflösung kann eine genaue Korrektur erreicht werden. Die Korrekturauflösung ist immer noch höher als die letztendlich erwünschte vorbestimmte Gesamtauflösung der optischen Aufnahme. Daher wird in einem weiteren Schritt 36 eine Reduktion der Auflösung durch digitale Kombination benachbarter Pixel 36 durchgeführt. Hier ist beispielsweise eine Kombination einer Pixelnachbarschaft von 4 Pixel, d.h. von zwei benachbarten Zeilenpixel und zwei benachbarten Spaltenpixel, wünschenswert. Dies entspricht einem weiteren Lichtempfindlichkeitsgewinn um einen Lichtempfindlichkeitsfaktor LEF = 4. Schließlich wird in einem Schritt 38 die Aufnahme mit vorbestimmter Gesamtauflösung erhalten, welche beispielsweise eine Linienauflösung von 400 µm hat. Aus Fig. 3 ist zu sehen, daß somit aus Einzelbildern mit hoher Auflösung und mit niedriger Lichtempfindlichkeit die Gesamtaufnahme mit niedriger Auflösung, jedoch hoher Lichtempfindlichkeit wird. Die Lichtempfindlichkeit wird jedoch nicht allein, wie es ausgeführt worden ist, dadurch erreicht, daß der optionale Schritt 32 vor der Korrektur und der Schritt 36 nach der Korrektur der Pixelkombination durchgeführt werden, sondern bereits dadurch, daß Einzelkameras eingesetzt werden, die linsenoptische Systeme haben, welche lediglich eine geringe Verkleinerung beispielsweise mit einem Faktor 5 oder sogar noch weniger erreichen, im Vergleich zu einer einzelnen Kamera im Stand der Technik zur Gesamtabbildung des Schirms, deren Linsensystem eine Verkleinerung von 100 oder mehr erreichen muß.

Erfindungsgemäß werden somit optische Sensoren eingesetzt, die eine höhere Auflösung aufweisen als für die letztendliche Anwendung benötigt wird. Setzt man beispielsweise eine Röntgenkamera im Format 40 cm x 40 cm aus 100 Teilbildern des Formats 4 cm x 4 cm zusammen und verwendet man CCIR-Sensoren, so würde jedes Teilbild aus über 400.000 Pixeln bestehen. Dies bedeutet für das Gesamtbild etwa 40 Millionen Pixel. In der Regel können Bilder dieser Auflösung jedoch nicht verwertet werden, weshalb die Zahl der Pixel durch Addition benachbarter Pixel reduziert wird. Setzt man CCD-Sensoren ein, kann die Ladung benachbarter Pixel analog auf dem Sensor selbst aufaddiert werden, kann also, wie es anhand des Schritts 32 in Fig. 3 dargelegt worden ist, ein Binning-Betrieb eingesetzt werden. Hierbei wird es bevorzugt, so viel als möglich analoge Additionen im Vergleich zur digitalen Addition zu verwenden, da beim Auslesen und Wandeln des analogen Signals natürlich Rauschen entsteht. Wird jedes Pixel einzeln ausgelesen und digitalisiert, entsteht dieses Rauschen für jedes Pixel. Wird jedoch zunächst analog addiert, entsteht das Rauschen nur einmal. Beispielsweise wird bei einem 4 x 4-Binning, d.h. einer analogen Addition von 16 Pixeln, die in vier benachbarten Zeilen bzw. Spalten liegen, 16 mal mehr Ladung in einem resultierenden Pixel gesammelt, wodurch die Lichtempfindlichkeit der optischen Kamera wächst.

Wie es beschrieben worden ist, wird die Nachweisempfindlichkeit für Röntgenstrahlen einer auf einer optischen Kamera (Abb. eines Szintillators mit Linsenoptik) basierenden Röntgenkamera durch Lichtverluste begrenzt. Durch Binning können die Lichtverluste reduziert werden. Es hat sich herausgestellt, daß es vorteilhaft ist, nur kleine Teilflächen des Szintillators, beispielsweise 3 cm x 3 cm, auf einen CCD-Sensor im CCIR-Format abzubilden. Jedes Pixel hat dann ohne Binning ein nur etwa 50 µm x 50 µm großes Feld des Szintillators abzubilden. Wird nur eine Auflösung von beispielsweise 400 µm benötigt, so können 4 x 4 Pixel gebinnt werden, und es kann dann immer noch die Korrektur auf einer höheren Auflösung als der letztendlich erhaltenen Auflösung durchgeführt werden. Insgesamt wird somit die Lichtempfindlichkeit um den Faktor 4 x 4 x 2 x 2 (Schritte 32 und 36 von Fig. 3), d.h. um einen Faktor 64, gesteigert.

Erfindungsgemäß wird für die Justage der Teilbilder bei einer höheren Auflösung gearbeitet. Die Korrektur ist damit genauer möglich. Insbesondere ist besser herhausfindbar, welche Bildelemente zu einer durchgehenden Linie eines Kalibriermusters auf der Ebene des Szintillators gehören. Erfindungsgemäß wird daher die analoge Addition (Binning) nicht bis zur gewünschten Gesamtauflösung durchgeführt, sondern es wird zunächst eine höhere Auflösung erzeugt. Wie es anhand von Fig. 3 dargelegt worden ist, werden zunächst 4 x 4 Pixel gebinnt, woraus eine Auflösung von 200 µ resultiert. Nach erfolgter Justage der Teilbilder (Drehung, translatorische Offset-Korrektur(= Verwerfen von überlappenden Bereichen) werden dann digital jeweils 2 x 2 benachbarte Pixel addiert. Zwar wird durch dieses Verfahren ein etwas höheres Rauschen im Vergleich zu einem kompletten Binning auf die gewünschte Gesamtauflösung erzeugt. Die Justage erfolgt jedoch auf diese Weise so genau, daß im Bild mit 400 µm Auflösung schließlich keine Verzeichnungen mehr erkennbar sind und insbesondere auch keine Kanten der einzelnen Teilbilder bzw. Teilflächen (TF 1, TF 2, TF 3, TF n von Fig. 2) mehr erkennbar sind.

Nachfolgend wird bezugnehmend auf die Figuren 4a bis 4d auf entsprechende Korrekturen eingegangen. Fig. 4a zeigt ein Beispiel für eine vertikale Korrektur. Fig. 4b zeigt ein Beispiel für eine horizontale Korrektur. Fig. 4c zeigt ein Beispiel für eine rotatorische Korrektur, während Fig. 4d schließlich ein Beispiel für eine Skalierungskorrektur darstellt. In den Figuren 4a bis 4d ist immer jeweils ein reales Einzelbild 40, 42, 44, 46 vor einer Korrektur dem korrespondierenden Einzelbild 41, 43, 45, 47 nach der Korrektur gegenübergestellt. So stellt das Einzelbild in Fig. 4a die Aufnahme eines Rechtecks 48 dar, dessen linke obere Ecke 50 als Referenzpunkt gegenüber einem ideal erwünschten Referenzpunkt 50 im korrigierten Einzelbild 41 über einen vertikalen Offset 51, der in Fig. 4a auch als vertikale Korrektur bezeichnet ist, versetzt ist. Die für das Einzelbild 40 in Fig. 4a vorzunehmende Korrekturvorschrift 20 würde beispielsweise lauten, die Pixeladressen des Einzelbildes 40 immer um die vertikale Korrektur 51 nach oben zu verschieben. Werden die Adressen in Fig. 4a beispielsweise von oben nach unten durchgehend numeriert, so wird die Korrekturvorschrift darin bestehen, jede y-Adresse eines Pixels im realen Einzelbild 40 um einen Δ-Wert, der quantitativ durch die Größe 51 gegeben ist, zu reduzieren. Dies führt dazu, daß im verschobenen Einzelbild der Überlappungsbereich oberhalb des Karos 48 so groß wird, wie es im korrigierten Einzelbild 41 angedeutet ist, und daß der Überlappungsbereich unterhalb des Karos 48 bereits sehr klein wird. Aus Fig. 4a ist zu sehen, daß eine maximale vertikale Korrektur durch den verwendeten Überlappungsbereich bestimmt ist. Eine Korrektur weit über den Überlappungsbereich hinaus ist nicht möglich, da in diesem Fall für beispielsweise die unterste Zeile des Karos 48 die Pixel ausgehen würden. Lediglich für eine sehr geringe Menge an fehlenden Pixeln könnte eine Pixelinterpolation durchgeführt werden.

Nachdem die Korrektur eine höhere Auflösung als das resultierende Gesamtbild hat, könnte noch eine Anzahl von Zeilen bzw. Spalten interpoliert werden, so daß eine Korrektur über Zeilen/Spalten möglich ist, die etwas größere Werte annehmen als durch den durch die einzelnen Kameras eingestellten Überlappungsbereich definiert ist.

In Fig. 4b wird analog zu der in Fig. 4a beschriebenen Vorgehensweise eine horizontale Pixelkorrektur vorgenommen, um aus dem realen Einzelbild 42, bei dem das Karo 48 zu weit rechts abgebildet wird, ein korrigiertes Einzelbild 43 zu erzeugen.

Auf analoge Art und Weise kann auch eine rotatorische Korrektur vorgenommen werden. Hierzu wird eine x- und eine y-Abweichung z.B. der linken oberen Ecke 50 des Karos 48 zum gewünschten Referenzpunkt 50 auf dem Kalibriermuster ermittelt. Um ferner festzustellen, daß es sich um eine rotatorische Abweichung handelt und nicht um eine horizontale oder vertikale Abweichung, wird als weiterer Referenzpunkt z.B. auch die rechte untere Ecke 52 des Karos verwendet. Aus den Abweichungen der Referenzpunkte im realen Einzelbild 44 von den Referenzpunkten im idealen Einzelbild 45 ist dann ermittelbar, daß es sich um eine rotatorische Korrektur um einen bestimmten Winkel Δφ handelt. Nach Bestimmung des Mittelpunkts des Karos als weiteren Referenzpunkt kann dann für jedes Pixel des Karos 48 eine entsprechende Korrektur vorgenommen werden, die im Hinblick auf den x-Korrekturbetrag und den y-Korrekturbetrag von kleinen Werten um den Mittelpunkt herum zu größeren Werten an den Rändern des Karos 48 steigen wird.

Das erfindungsgemäße Verfahren ist ebenfalls dazu in der Lage, eine Skalierungskorrektur durchzuführen, wie es in Fig. 4d gezeigt ist. Hierzu können als Referenzpunkte des Karos 48 beispielsweise ebenfalls das linke obere Eck 50 und das rechte unter Eck 52 aufgenommen werden. Eine einfache Distanzbestimmung der Diagonalen zwischen dem linken oberen Eck 50 und dem rechten unteren Eck 52 im Vergleich zu einer Diagonalen des abgebildeten Rechtecks auf dem Kalibriermuster wird ergeben, ob das real dargestellte Karo 48 durch die Linsenoptik einer Einzelkamera zu stark verkleinert worden ist, wie es in Fig. 4d beispielhaft dargestellt ist. Genauso könnte natürlich auch bestimmt werden, ob die Linsenoptik eine zu geringe Verkleinerung erreicht hat, als sie vorgesehen ist. Alle Linsen einer erfindungsgemäßen Kamera haben somit eine Nennverkleinerung mit einer typischerweise nach oben und nach unten vorliegenden Toleranz, die aufgrund der nachgeschalteten elektronischen Korrektur nicht zu klein sein braucht, so dass auch hier günstige Linsen verwendet werden können, um den Preis der Kamera reduzieren zu können.

Eine Korrekturvorschrift würde hier darin bestehen, ausgehend von einem bestimmten Skalierungskorrekturfaktor alle Pixel des Einzelbildes 46 umzuadressieren, um aus dem realen Einzelbild 46 das ideale korrigierte Einzelbild 47 zu machen.

Anhand der Pixelinformationen in dem Überlappungsbereich nach erfolgter geometrischer Korrektor gemäß der in Fig. 4a bis Fig. 4d beschriebenen Vorgehensweise kann ferner im Überlappungsbereich auch eine Helligkeitskorrektur durchgeführt werden, um Helligkeitsunterschiede der Einzelkameras auszugleichen. Würde beispielsweise festgestellt werden, daß die Pixel im Überlappungsbereich des Einzelbildes 22a von Fig. 2 alle heller sind als die Pixel des Einzelbilds 22a im Überlappungsbereich 23, so könnten die Pixel des einen Einzelbildes aufgehellt werden, oder es könnten die Pixel des anderen Bildes abgedunkelt werden, oder es könnte ein Mittelwert zwischen beiden Einzelbildern für beide benachbarten Einzelbildern eingestellt werden. Für die Helligkeitskorrektur wird es bevorzugt, sämtliche Einzelbilder in einer Reihe und einer Spalte zu berücksichtigen, um sicherzustellen, daß alle Einzelbilder der Kamera auf einen gemeinsamen Wert korrigiert werden können. In diesem Fall müssen nicht unbedingt weitere Vorkehrungen für den Überlappungsbereich mehr getroffen werden, derselbe könnte prinzipiell verbleiben und würde im zusammengesetzten Einzelbild nicht weiter auffallen, da die Pixel im Überlappungsbereich denselben Wert haben.

Erfindungsgemäß wird jedoch zur Qualitätssteigerung und zur Artefaktvermeidung bevorzugt, Pixel im Überlappungsbereich 23 zu eliminieren, sofern dies nicht bereits zusammen mit der horizontalen bzw. vertikalen Korrektur geschehen ist. Dies kann auf mehrere Arten und Weisen erfolgen. So könnte zur Überlappungsbereicheliminierung der gesamte Überlappungsbereich des Einzelbilds 22a eliminiert werden, so daß ein Teil der Teilfläche TF1 durch die Teilfläche TF2 abgebildet wird. Alternativ, und diese Art und Weise wird bevorzugt, wird bei dem in Fig. 2 dargestellten Beispiel der Überlappungsbereich 23 hälftig bzw. gemäß der durchgeführten Korrektur eliminiert. So wird ein Teil des Überlappungsbereichs 23, der in Fig. 2 mit 23a dargestellt ist, von dem Einzelbild 22b eliminiert, während der andere Teil 23b von dem Einzelbild 22a eliminiert wird, so daß jede Einzelkamera genau eine Teilfläche abbildet. Diese Überlappungsbereich-Eliminierung dahingehend, daß eine Kamera genau eine Teilfläche und nicht noch Pixel benachbarter Teilflächen abbildet, kann am besten dadurch stattfinden, daß Kalibriermuster nicht nur mit vertikalen bzw. horizontalen Linien verwendet werden, sondern daß ein Karo-artiges Kalibriermuster verwendet wird, das prinzipiell so aussieht, wie es in Fig. 2 gezeigt ist. Die Gitternetzlinien, die in Fig. 2 in dem Schirm eingezeichnet sind, stellen genau die Aufteilung des Schirms in Einzelbilder dar. Als Referenzpunkte für die horizontale bzw. vertikale Korrektur bieten sich nunmehr Kreuzungspunkte bzw. Ecken des Gitternetzes in Fig. 2 an. Damit wäre das Karo 48, das in Fig. 4a, Fig. 4b, Fig. 4c und Fig. 4d abgebildet worden ist, genau der Ausschnitt der Pixel einer Einzelkamera. Die Bildverarbeitungseinrichtung 18 wird in diesem bevorzugten Fall als Korrekturvorschrift alle Pixel innerhalb des abgebildeten Karos 48 an die entsprechende Stelle in einem Bildspeicher für das Gesamtbild setzen.

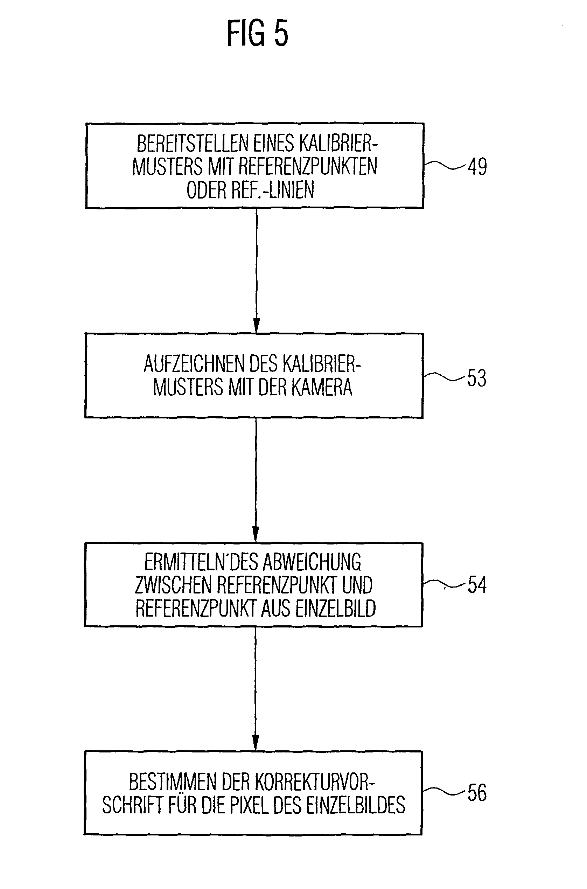

Ein einem Aufnahmedurchgang vorhergehender Kalibriervorgang würde derart ablaufen wie es in Fig. 5 gezeigt ist. Zunächst wird ein Kalibriermuster mit Referenzpunkten oder Referenzlinien bereitgestellt (49). Es ist ersichtlich, daß eine Referenzlinie aus mehreren Referenzpunkten zusammengesetzt sein kann. Hierauf wird mit der Kamera, also dem Array von Einzelkameras, das im Schritt 49 bereitgestellte Kalibriermuster in einem Schritt 53 aufgezeichnet. Dann wird gemäß dem Prozedere, das beispielhaft in den Figuren 4a bis 4d dargestellt worden ist, allgemein eine Abweichung zwischen einem Referenzpunkt des Einzelbildes und einem durch das Kalibriermuster vorgegebenen Referenzpunkt ermittelt (Schritt 54). Aus dieser Abweichung wird eine vertikale Korrektur, eine horizontale Korrektur, eine rotatorische Korrektur, eine Skalierungskorrektur oder aber auch eine Helligkeitskorrektur ermittelt, die schließlich als Korrekturvorschrift für die Pixel eines entsprechenden Einzelbildes bestimmt wird (Schritt 56).

In dem Schritt 56 wird für sämtliche, beispielsweise 100 Einzelkameras in dem Array von Einzelkameras nach und nach eine Korrekturvorschrift für jedes Einzelbild, d.h. jede Einzelkamera, erhalten. Je nach Array-Größe kann der Kalibriervorgang eine beträchtliche Zeit in Anspruch nehmen. Dies ist jedoch nicht weiter kritisch, da dieser Kalibriervorgang lediglich einmal, nämlich vor der Auslieferung der erfindungsgemäßen Kamera stattfinden muß. Nachdem alle Einzelkameras fest an dem Kameraträger befestigt sind, wird sich die Korrekturvorschrift für eine Einzelkamera im Gebrauch der Kamera nicht mehr ändern. Weiterhin vorteilhaft an dieser Tatsache, daß die Korrekturvorschriften für die Einzelbilder lediglich einfache Pixeladress-Manipulationen oder einfache Pixelwert-Manipulationen sind, die softwaremäßig leicht durchgeführt werden können, oder die sogar hardwaremäßig in die Bildverarbeitungseinrichtung 18 von Fig. 1 einprogrammiert werden können, um eine schnelle Korrektur zu erreichen, derart, daß eine Echtzeit-Kamera erhalten werden kann, da die Pixelmanipulationen während des Betriebs der Kamera schnell ausgeführt werden können. Selbstverständlich kann die Kalibrierung durch Einsatz geeigneter Bildverarbeitungsmethoden und unter Verwendung bekannter Kalibriermuster automatisiert werden.

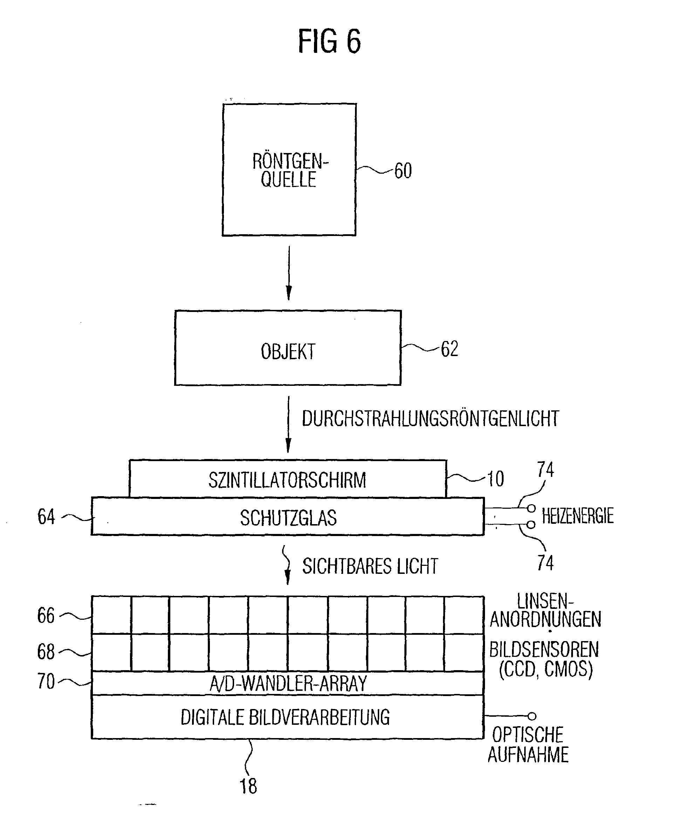

Wie es ausgeführt worden ist, eignet sich die erfindungsgemäße Kamera besonders als Röntgen-Kamera zur Abbildung eines Szintillatorschirms. Ein entsprechendes Szenario ist in Fig. 6 dargestellt. Eine Röntgenquelle 60 strahlt auf ein Objekt, das letztendlich abgebildet werden soll und in Fig. 6 mit 62 bezeichnet ist. Objekte können selbstverständlich medizinische Objekte sein. Die erfindungsgemäße Kamera wird jedoch besonders im industriellen Einsatz, wo die Strahlendosis nicht so sehr entscheidend ist, wo es jedoch vielmehr auf Schnelligkeit und Bildwiederholfrequenz ankommt, eingesetzt werden. Entsprechende Objekte 62 sind in der industriellen Anwendung beispielsweise Kfz-Räder oder zu durchleuchtende Objekte bei der Sicherheitskontrolle an Flughäfen etc.. Das Durchstrahlungsröntgenlicht, das durch das Objekt 62 hindurch kommt, also von dem Objekt 62 nicht absorbiert worden ist, fällt dann auf einen Szintillatorschirm 10. Der Szintillatorschirm 10 absorbiert einen von der Wellenlänge des Röntgenlichts abhängigen Anteil des Durchstrahlungsröntgenlichts und wandelt dasselbe in eine optische Strahlung um. Die optische Strahlung durchläuft ein für die optische Strahlung transparentes Schutzglas 64 und tritt dann auf die erfindungsgemäße Kamera als sichtbares Licht auf, welche aus dem in Fig. 6 schematisch gezeichnete Array von Einzelkameras besteht, wobei jede Einzelkamera eine Linsenanordnung 66 gefolgt von einem beispielsweise CCD- oder CMOS-Bildsensor 68 aufweist. Den Bildsensoren nachgeschaltet befindet sich ferner ein Analog/Digital-Wandler-Array 70, das die digitale Bildverarbeitungseinrichtung 18 (Fig. 1) speist, um letztendlich die optische Aufnahme mit der gewünschten Gesamtauflösung zu erhalten.

Die Schutzglasscheibe 64 ist vorgesehen, um die erfindungsgemäße Kamera und insbesondere die Linsenanordnung 66 und die Bildsensoren 68 vor einer eventuell durch den Szintillatorschirm 10 nicht absorbierten Röntgenstrahlung zu schützen. Die Schutzglasscheibe 64 ist derart ausgebildet, daß sie im optischen Bereich durchsichtig ist, jedoch für Röntgenstrahlen stark absorbierend ist. Hierbei ist Bleiglas gut geeignet. Bei bisher bekannten Röntgensystemen bei denen ein Szintillatorschirm linsenoptisch auf eine optische Kamera abgebildet wird, erfolgt der Schutz der optischen Kamera vor der Röntgenstrahlung in der Regel dadurch, daß das Bild über einen Spiegel auf die optische Kamera abgebildet wird, und die optische Kamera außerhalb des Röntgen-Strahlungsbereichs angeordnet wird. Ein möglicher Grund dafür kann sein, daß die optische Transmission von Bleiglas durch Bestrahlung mit Röntgenstrahlung abnimmt, so daß nach längerer Bestrahlung ein großer Teil des Lichts im Bleiglas absorbiert werden würde.

Erfindungsgemäß wird diesem Effekt dadurch entgegengewirkt, daß die Schutzglasscheibe 64 beheizbar ausgeführt ist, und mit Heizenergie über Anschlüsse 74 versorgt werden kann. Wie es beispielsweise in der Patentschrift DE 19726884C1 beschrieben ist, können durch Bestrahlung im Glas erzeugte Farbzentren durch Erwärmung wieder abgebaut werden. Experimente haben gezeigt, daß hierzu Temperaturen im Bereich von 100 bis 150°C ausreichend sind. Bei geringfügiger Strahlenbelastung genügt sogar eine längere Lagerung bei Raumtemperatur, also bei einer Temperatur zwischen 20 und 30°C.

Die in Fig. 6 dargestellte erfindungsgemäße Anordnung mit Schutzscheibe anstelle eines Spiegels hat zum einen den Vorteil des kompakteren Aufbaus. Zum anderen können kurzbrennweitige Objektive eingesetzt werden, die mit höherer Lichtstärke verfügbar sind als die ansonsten erforderlichen langbrennweitigen Objektive. Langbrennweitige Objektive werden bei einer Anordnung mit Spiegeln insbesondere bei einer großen Anzahl von optischen Kameras erforderlich, da der gesamte Lichtweg vom Szintillator zu den optischen Sensoren auch durch die Größe des Szintillatorschirms bestimmt wird. Insbesondere müssen die optischen Sensoren außerhalb des bestrahlten Bereichs angeordnet sein.

Der für die Umwandlung der Röntgenstrahlung in sichtbares Licht erforderliche Szintillatorschirm 10 kann entweder auf einem separaten Träger aufgebracht werden oder direkt auf der Schutzscheibe.

Es wird ferner bevorzugt, die Schutzglasscheibe 64 optisch entspiegelt auszuführen, um Reflektionen und sogenannte "Geisterbilder" zu vermeiden.

Eine bevorzugte Ausführung der erfindungsgemäßen Kamera ist vollständig auf einer Platine ausgeführt. So können ohne weiteres normale Platinen in den Größen 20 x 20 cm² oder 40 x 40 cm² gefertigt werden. Die Halbleitersensorelemente werden dann ohne Gehäuse etc. auf der Platine direkt befestigt. Linsen sind typischerweise bereits auf den "nackten" Sensorelementen angeordnet. Zusätzlich auf der Platine ausgeführt sind ferner die zugehörigen A/D-Wandler und die Bildverarbeitungsschaltung. Je nach Anforderung kann auch der Bildspeicher auf der Platine ausgeführt sein oder über eine entsprechende Schnittstelle extern angeschlossen werden.

Wie es bereits ausgeführt worden ist, kann bei CCD-Kameras die Verkleinerung der Anzahl der Pixel durch das Binning realisiert werden. Werden sehr viele Pixel zusammengefaßt, wie z.B. 10 x 10 Pixel, so wird die Anzahl der zu digitalisierenden effektiven Pixel (gebinnte Pixel) klein. Da der optische Sensor beispielsweise 1000 x 1000 = 1.000 000 Pixel hat, müssen nach einem Binning von 10 x 10 nur 100 x 100 = 10.000 Pixel digitalisiert werden. Reicht diese Auflösung als Korrekturauflösung aus, d.h. ist sie größer als die letztendlich gewünschte Gesamtauflösung, so können relativ geringe Digitalisierungsraten realisiert werden. Solche Digitalisierungsraten liegen im Bereich von.10 MHz. Dann können die CCD-Kameras mit hoher Bildfrequenz ausgelesen werden, um eine Hochgeschwindigkeits-Röntgenkamera zu realisieren, welche z.B. 1000 Bilder pro Sekunde liefert.

Werden anstelle von CCD-Kameras CMOS-Kameras eingesetzt, so entfällt die Möglichkeit des Binning. Zwar könnte hier jedes beispielsweise vierte Pixel nur ausgelesen werden, um die Datenrate zu verringern. Dies würde jedoch auch eine um den Faktor 4 geringere Empfindlichkeit der Kamera ergeben. Erfindungsgemäß wird daher vorgeschlagen, insbesondere bei der Verwendung von CMOS-Kameras, jedoch auch bei einer Verwendung von anderen Lichtsensoren, jedes digitalisierte Teilbild zunächst in einem separatem Bildspeicher abzulegen.

Da pro Teilbild nur geringe Datenraten anfallen, können lange Bildsequenzen gespeichert werden. Aufgrund der niedrigen Digitalisierungsrate können AD-Wandler mit hoher Wandlungstiefe, beispielsweise 12 Bit, anstelle der im Hochgeschwindigkeitsbereich üblichen 8 Bit-Wandler eingesetzt werden, wodurch höhere Helligkeitsunterschiede in einem Bild erfaßt werden können. Die Teilbilder werden erfindungsgemäß erst nach Abschluß der Hochgeschwindigkeitsaufnahmen aus den separaten Speichern ausgelesen und zu Bildfolgen zusammengesetzt oder in Echtzeit, d.h. schritthaltend mit der Bildaufnahme, zusammengeführt und anschließend ebenfalls in Echtzeit ausgelesen.

Gemäß einem ersten Realisierungsbeispiel wird eine Röntgenkamera verwendet, die auf einer aktiven Fläche von 40 cm x 40 cm eine Auflösung von 400 µm x 400 µm pro Pixel (1000 x 1000 Pixel) erlaubt. Ferner wird von einem vertikalen Strahlengang der Röntgenstrahlung von oben nach unten ausgegangen, wie er in Fig. 6 dargestellt ist. Der Szintillator wird auf einem mechanisch stabilen, gering absorbierenden Trägermaterial aufgebracht, in Richtung der Strahlung betrachtet auf der Rückseite des Trägermaterials. Das Trägermaterial kann, wenn es aus Glas ist, beheizt werden. Der Träger ist in Fig. 6 nicht dargestellt. Unterhalb des Trägers befindet sich in ausreichendem Abstand eine auf 100 bis 150°C geheizte Bleiglasscheibe. Die Heizung erfolgt beispielsweise elektrisch über eine optisch transparente Heizfolie oder über eine ebenfalls optische transparente, direkt aufgebrachte Schicht, die als elektrische Widerstandsschicht arbeitet und durch die Anschlüsse 74 mit Heizenergie versorgt wird. Alternativ kann der Szintillator auch direkt auf der beheizten Bleiglasscheibe, die dann als Trägermaterial fungiert, angebracht werden.

Unterhalb der Bleiglasscheibe sind 10 x 10 optische CCD-Einzelkameras mit jeweils mindestens 1024 x 1024 Pixel in einer Matrix von 4 cm x 4 cm angeordnet. Jede Kamera erfaßt ein Teilbild, welches etwas größer ist als 40 mm x 40 mm, um den für die Korrektur, wie sie in den Figuren 4a bis 4d beschrieben worden ist, benötigten Überlappungsbereich 23 (Fig. 2) zu realisieren. Die optische Abbildung wird so gewählt, daß ein Pixel 40 µm x 40 µm abbildet. Jede Kamera kann in verschiedenen Binning-Stufen beschrieben werden, beispielsweise geringfügig gebinnt für Justagezwecke oder stärker gebinnt für die elektronische Korrektur, wobei das stärkere Binning für die elektronische Korrektur auch im Normalbetrieb der Kamera eingesetzt wird. Sofern ein nach der elektronischen Korrektur nötiges Pixel-Kombinieren auf die erwünschte Gesamtauflösung noch möglich ist.

Für die Justage wird auf der Ebene des Szintillators ein Prüfmuster angebracht, das, wie es anhand von Fig. 3 dargelegt worden ist, in vertikaler und horizontaler Richtung alle 40 mm parallele Linien enthält. Das Muster bildet somit 40 mm x 40 mm große Karos, die vorzugsweise gleichzeitig die Begrenzungslinien der einzelnen Teilbilder darstellen. Das Prüfmuster wird zunächst so justiert, das Zeilen und Spalten etwa parallel zur Matrixanordnung der Kameras liegen. Anschließend werden die einzelnen Kameras so gedreht, daß die Zeilen und Spalten des Bildes in etwa parallel zu den Zeilen und Spalten des Prüfmusters liegen. Das Prüfmuster wird schließlich zur Parallelverschiebung in eine Lage verschoben, bei der jede Kamera ein Karo komplett abbildet.

Die Feinjustage erfolgt zunächst dadurch, daß nacheinander für jede Kamera das auf ca. 200 µm x 200 µm gebinnte Bild aufgenommen und durch digitale Verarbeitung so gedreht wird, daß die Zeilen und Spalten des Bildes exakt parallel zu den Zeilen und Spalten des Prüfmusters angeordnet sind. Anschließend werden alle Pixel verworfen, die außerhalb der Begrenzungslinien des Prüfkaros liegen. Für die letztendliche Darstellung im Normalbetrieb werden dann von den übrigbleibenden Pixeln der Teilbilder jeweils 2 x 2 Pixel digital kombiniert, d.h. vorzugsweise addiert.

Bei einem alternativen Realisierungsbeispiel wird eine TDI-Röntgenzeilenkamera durch ein eindimensionales Array von Einzelkameras aufgebaut, die auf einer aktiven Länge von z.B. 50 cm eine Pixelauflösung von 0,25 mm erlaubt. Optische TDI-Kameras sind aus dem U.S.-Patent Nr. 3,833,762 bekannt. Bei diesen Kameras wird Ladung synchron zum Abbild des Objekts auf dem CCD-Sensor verschoben, um auf diese Weise die effektive Belichtungszeit zu erhöhen und eine höhere Empfindlichkeit der Kamera zu erhalten.

Im Ausführungsbeispiel wird eine lineare Anordnung aus vier Sensoren verwendet, die jeweils über 1024 x 256 Pixel verfügen, um eine optische Abbildung eines 50 cm langen Szintillatorstreifens zu erreichen. Der Schutz der optischen Kamera vor der Röntgenstrahlung erfolgt dadurch, daß jede Kamera außerhalb des Strahlungsbereichs angeordnet ist und den Szintillator über einen optischen Spiegel abbildet. Alternativ kann auch, wie es in Fig. 6 dargestellt worden ist, die Schutzglasscheibe 64 aus vorzugsweise Bleiglas eingesetzt werden. Zur Justage werden die TDI-Kameras in einem Vollbild-Modus betrieben. Hierzu wird das Prüfmuster mit kurzen Lichtblitzen beleuchtet und jeweils 256 aufeinanderfolgende Zeilen als Bild dargestellt. Erfolgen die Lichtblitze nach jeweils 256 Zeilen, erhält man auch im TDI-Modus eine Vollbild-Darstellung. Würde eine kontinuierliche Beleuchtung eingesetzt werden, so würden alle Linien, die senkrecht zur Vorschubrichtung der Ladung liegen, "verschmiert" dargestellt werden.

Die weitere Feinjustage erfolgt wie oben beschrieben. Ein wesentlicher Grund für die Verwendung mehrerer Sensoren ist jedoch hier der hohe Lichtverlust bei Verwendung nur eines Sensors. Der Überlapp der einzelnen Sensoren wird vorzugsweise so gewählt, daß jeder Sensor effektiv 1000 Pixel liefert. Da vier Sensoren verwendet werden, erhält man eine maximale Auflösung von 500 mm / 4000 = 125 µm.

In Scanrichtung weist die Kamera in diesem Ausführungsbeispiel eine aktive Breite (Scanbreite) von ca. 31 mm auf. Für bestimmte Anwendungen kann es erforderlich sein, diese Breite über Blenden zu begrenzen. In diesem Fall wird durch die Blenden die Anzahl der genutzten Zeilen reduziert.

## Patentansprüche

1. Kamera zuroptischen Aufnahme eines Schirms (10), wobei der Schirm eine Fläche aufweist, und wobei für die optische Aufnahme eine vorbestimmte Gesamtauflösung vorgesehen ist, mit folgenden Merkmalen:
einem Kameraträger (12) mit einem Array von Kamerabefestigungen (14);
einem Array von optischen Einzelkameras (16), wobei jede optische Einzelkamera (16) an einer zugeordneten Kamerabefestigung (14) fest angebracht ist, wobei eine optische Einzelkamera einen Lichtsensor (68) und eine Optikabbildungseinrichtung (66) aufweist, wobei der Lichtsensor (68) und die Optikabbildungseinrichtung (66) wirksam sind, um eine Teilfläche (TF1) der Schirmfläche mit einer Einzelauflösung aufzunehmen, die höher als die Gesamtauflösung ist; und
einer Bildverarbeitungseinrichtung (18) zum Bearbeiten von digitalen Einzelbildern des Arrays von optischen Einzelkameras (16), um die optische Aufnahme des Schirms mit einer vorbestimmten Gesamtauflösung zu erzeugen,
wobei die Bildverarbeitungseinrichtung (18) wirksam ist, um die digitalen Einzelbilder einer Korrektur zu unterziehen, um Ausrichtungsungenauigkeiten und/oder Parameterschwankungen in dem Array von optischen Einzelkameras (16) zu reduzieren, wobei für die Korrektur eine für ein Einzelbild bei einer Kalibrierung bestimmte Korrekturvorschrift (20) verwendet wird, und wobei die Korrektur bei einer Korrekturauflösung stattfindet, die höher als die vorbestimmte Gesamtauflösung und niedriger oder gleich der Einzelauflösung ist, um korrigierte Einzelbilder oder ein korrigiertes Gesamtbild zu erhalten, und
um benachbarte Pixel der korrigierten Einzelbilder zu kombinieren und die Bilder dann zusammenzusetzen, oder um benachbarte Pixel des korrigierten Gesamtbilds zu kombinieren, um die optische Aufnahme mit der vorbestimmten Gesamtauflösung zu erhalten.

2. Kamera nach Anspruch 1, bei der die optischen Einzelkameras (16) so an dem Kameraträger (12) befestigt sind, daß kürzeste Abstände der Einzelkameras (16) zu dem Schirm (10) im wesentlichen konstant sind und nur innerhalb eines Toleranzbereichs variieren.

3. Kamera nach Anspruch 1 oder 2, bei der die Einzelkameras (16) so an ihren zugeordneten Kamerabefestigungen (14) befestigt sind, daß sie untereinander hinsichtlich einer Drehung eines Lichtsensors um eine optische Achse der Einzelkamera, die der Lichtsensor aufweist, mechanisch ausgerichtet sind, so daß eine sich über Teilflächen der Schirmfläche erstreckende Gerade in Einzelpixeln der Einzelkameras, die die Teilflächen abbilden, als parallele Teilgraden abgebildet sind.

4. Kamera nach Anspruch 3, bei der die Bildverarbeitungseinrichtung ausgebildet ist, um als Korrekturvorschrift (20) eine vertikale und/oder horizontale Verschiebung der Einzelbilder der Einzelkameras zueinander durchzuführen und einen verbleibenden Überlappungsbereich (22) in den Einzelbildern der benachbarten Einzelkameras (16) zu verwerfen.

5. Kamera nach Anspruch 1 oder 2, bei der die Bildverarbeitungseinrichtung (18) ausgebildet ist, um als Korrekturvorschrift eine vertikale und/oder horizontale Verschiebung der Einzelbilder der Einzelkameras zueinander und eine Drehung der Einzelbilder zueinander durchzuführen, und um einen verbleibenden Überlappungsbereich (23) der Einzelbilder benachbarter Einzelkameras zu verwerfen.

6. Kamera nach einem der vorhergehenden Ansprüche, bei der die Bildverarbeitungseinrichtung (18) ausgebildet ist, um abweichende Verkleinerungen in den Optikabbildungseinrichtungen (66) der Einzelkameras (16) zu korrigieren.

7. Kamera nach einem der vorhergehenden Ansprüche,
bei der die Bildverarbeitungseinrichtung (18) ausgebildet ist, um als Korrekturvorschrift (20) eine Nachschlagtabelle zu verwenden, wobei einer Einzelkamera - eine eigene Nachschlagtabelle zugeordnet ist, und wobei in der Nachschlagtabelle einer Pixelposition des Einzelbildes vor der Korrektur eine Pixelposition des Einzelbildes nach der Korrektur zugeordnet ist, um eine translatorische, rotatorische und/oder skalierungsmüßige Korrektur zu bewirken.

8. Kamera nach einem der vorhergehenden Ansprüche, bei der die Optikabbildungseinrichtung (66) einer Einzelkamera (16) eine Verkleinerung um einen Faktor bewirkt, der kleiner als 5 ist.

9. Kamera nach einem der vorhergehenden Ansprüche,
bei der die Anzahl der Pixel der optischen Aufnahme gleich der Anzahl der Pixel einer Teilfläche ist, und
bei der ein Einzelbild eine Auflösung hat, die im wesentlichen gleich der Gesamtauflösung multipliziert mit der Anzahl der Einzelkameras ist.

10. Kamera nach Anspruch 9, bei die Auflösung eines Einzelbildes größer als das 15-fache der Gesamtauflösung der optischen Aufnahme ist und die Anzahl der Einzelkameras größer als 15 ist.

11. Kamera nach einem der vorhergehenden Ansprüche, bei der der Lichtsensor einer Einzelkamera ein CCD-Sensor ist, der wirksam ist, um in einem Binning-Modus eine Maximalauflösung des CCD-Sensors in ganzzahligen Schritten auf die Einzelauflösung auf analoge Weise zu reduzieren.

12. Kamera nach einem der vorhergehenden Ansprüche, bei der der Schirm ein Szintillatorschirm (10) ist.

13. Kamera nach einem der vorhergehenden Ansprüche,
bei der zwischen dem Schirm (10) und der Optikabbildungseinrichtung (66) eine für Röntgenstrahlen absorbierende und optisch transparente Schutzscheibe (64) angeordnet ist.

14. Kamera nach Anspruch 13, bei der die Schutzscheibe während oder nach einer Bestrahlung mit Röntgenstrahlen beheizbar (74) ist.

15. Kamera nach einem der vorhergehenden Ansprüche, bei der die Bildverarbeitungseinrichtung (18) folgende Merkmale aufweist:
einen eigenen Bildspeicher (19) für jede Einzelkamera, wobei die Bildverarbeitungseinrichtung (18) wirksam ist, um eine Sequenz von Einzelbildern einer Einzelkamera in dem Bildspeicher (19) für die Einzelkamera abzuspeichern.

16. Kamera nach Anspruch 15,
bei der jede Einzelkamera ausgangsseitig einen A/D-Wandler (70) aufweist, dessen Wandlungstiefe größer als 8 Bit ist.

17. Kamera nach einem der vorhergehenden Ansprüche,
bei der die Optikanordnung eine oder mehrere Linsen, eine Spiegeloptik, eine Fiberoptik oder eine Kombination der genannten Optikanordnungen umfaßt

18. Verfahren zur optischen Aufnahme eines Schirms, wobei der Schirm eine Fläche aufweist, und wobei für die optische Aufnahme eine vorbestimmte Gesamtauflösung vorgesehen ist, mit folgenden Schritten:
Aufzeichnen des Schirms mittels eines Arrays von optischen Einzelkameras, wobei jede Einzelkamera an einer Kamerabefestigung eines Kameraträgers fest angebracht ist, wobei eine optische Einzelkamera einen Lichtsensor (68) und eine Optikabbildungseinrichtung (66) aufweist, wobei der Lichtsensor (68) und die Optikabbildungseinrichtung (66) wirksam sind, um eine Teilfläche der Schirmfläche mit einer Einzelauflösung aufzunehmen, die höher als die Gesamtauflösung ist; und
Bearbeiten von digitalen Einzelbildern des Arrays von optischen Einzelkameras, um die optische Aufnahme des Schirms mit der vorbestimmten Gesamtauflösung zu erzeugen, wobei der Schritt des Bearbeitens folgende Unterschritte aufweist:
Korrigieren der digitalen Einzelbilder, um Ausrichtungsungenauigkeiten und/oder Parameterschwankungen in dem Array von optischen Einzelkameras (16) zu reduzieren, wobei im Schritt des Korrigierens eine für ein Einzelbild bei einer Kalibrierung bestimmte Korrekturvorschrift (20) verwendet wird, und wobei die Korrektur bei einer Korrekturauflösung stattfindet, die höher als die vorbestimmte Gesamtauflösung und niedriger oder gleich der Einzelauflösung ist, um korrigierte Einzelbilder oder ein korrigiertes Gesamtbild zu erhalten; und
Kombinieren von benachbarten Pixel der korrigierten Einzelbilder und anschließendes Zusammensetzen von kombinierten Einzelbildern oder Kombinieren von benachbarten Pixeln des korrigierten Gesamtbildes, um die optische Aufnahme mit der vorbestimmten Gesamtauflösung zu erhalten.

## Claims

1. Camera for optically capturing a screen (10), wherein the screen has an area, and wherein a predetermined overall resolution is provided for the optical capture, comprising:
a camera support (12) with an array of camera mounts (14);
an array of optical individual cameras (16), wherein every optical individual camera (16) is fixed on an associated camera mount (14), wherein an optical individual camera has a light sensor (68) and an optical imaging device (66), wherein the light sensor (68) and the optical imaging device (66) are effective to capture a partial area (TF 1) of the screen area with an individual resolution, which is higher than the overall resolution; and
an image processing device (18) for processing digital individual images of the array of optical individual cameras (16) to generate the optical capture of the screen with a predetermined overall resolution,
wherein the image processing device (18) is effective to subject the digital individual images to a correction to reduce alignment inaccuracies and/or parameter variations in the array of optical individual cameras (16), wherein a correction rule (20) determined for an individual image during calibration is used for the correction, and wherein the correction takes place with a correction resolution, which is higher than the predetermined overall resolution and lower or equal to the individual resolution to obtain corrected individual images or a corrected overall image, and
to combine adjacent pixels of the corrected individual images and to assemble the images or to combine adjacent pixels of the corrected overall image to obtain the optical resolution with the predetermined overall resolution.

2. Camera according to claim 1, wherein the optical individual cameras (16) are mounted on the camera support (12) such that the shortest distances of the individual cameras (16) to the screen (10) are substantially constant and only vary within a tolerance range.

3. Camera according to claim 1 or 2, wherein the individual cameras (16) are mounted on their associated camera mounts (14) such that they are mechanically adjusted in relation to each other with regard to a rotation of a light sensor around an optical axis of the individual camera, which the light sensor comprises, so that a straight line extending across partial areas of the screen area is imaged in individual pixels of the individual cameras, which image the partial areas, as parallel partial straight lines.

4. Camera according to claim 3, wherein the image processing device (18) is formed to perform a vertical and/or horizontal displacement of the individual images of the individual cameras in relation to each other as correction rule (20), and to discard a remaining overlapping area (22) in the individual images of the adjacent individual cameras (16).

5. Camera according to claim 1 or 2, wherein the image processing device (18) is formed to perform a vertical and/or horizontal displacement of the individual images of the individual cameras to each other and a rotation of the individual images in relation to each other as correction rule, and to discard a remaining overlapping area (23) of the individual images of adjacent individual cameras.

6. Camera according to one of the previous claims, wherein the image processing device (18) is formed to correct deviating reductions in the optical imaging device (66) of the individual cameras (16).

7. Camera according to one of the previous claims, wherein the image processing device (18) is formed to use a look-up table as correction rule (20), wherein an individual look-up table is associated to an individual camera, and wherein a pixel position of the individual image after the correction is associated to a pixel position of the individual image prior to the correction in the look-up table, to effect a translatory, rotatory and/or scaling-type correction.

8. Camera according to one of the previous claims, wherein the optical imaging device (66) of an individual camera (16) causes a reduction by a factor of less than 5.

9. Camera according to one of the previous claims,
wherein the number of pixels of the optical capture is equal to the number of pixels of a partial area, and
wherein an individual image has a resolution which is substantially equal to the overall resolution multiplied with the number of individual cameras.

10. Camera according to claim 9, wherein the resolution of an individual image is higher than 15 times the overall resolution of the optical capture and the number of the individual cameras is higher than 15.

11. Camera according to one of the previous claims, wherein the light sensor of an individual camera is a CCD sensor, which is effective to reduce a maximum resolution of the CCD sensor in integer steps to the individual resolution in an analog way in a binning mode.

12. Camera according to one of the previous claims, wherein the screen is a scintillator screen (10).

13. Camera according to one of the previous claims, wherein a protective pane (64), which is X-ray absorbing and optically transparent, is arranged between the screen (10) and the optical imaging device (66).

14. Camera according to claim 13, wherein the protective pane can be heated during or after radiation with X-rays.

15. Camera according to one of the previous claims, wherein the image processing device (18) comprises:
an individual image memory (19) for every individual camera, wherein the image processing device (18) is effective to store a sequence of individual images of the individual camera in the image memory (19) for the individual camera.

16. Camera according to claim 15, wherein every individual camera has an A/D converter (70) on the output side, whose conversion depth is more than 8 bit.

17. Camera according to one of the previous claims, wherein the optical arrangement comprises one or several lenses, mirror optics, fiber optics or a combination of said optical arrangements.

18. Method for optically capturing a screen, wherein the screen has an area, and wherein a predetermined overall resolution is provided for the optical capture, comprising the steps of:
capturing the screen via an array of optical individual cameras, wherein every individual camera is fixed on a camera mount of a camera support, wherein an optical individual camera comprises a light sensor (68) and an optical imaging device (66), wherein the light sensor (68) and the optical imaging device (66) are effective to capture a partial area of the screen area with an individual resolution, which is higher than the overall resolution; and
processing digital individual images of the array of optical individual cameras to generate the optical capture of the screen with the predetermined overall resolution, wherein the step of processing comprises the following substeps:
correcting the digital individual images to reduce alignment inaccuracies and/or parameter variations in the array of optical individual cameras (16), wherein in the step of correcting a correction rule (20) determined for an individual image during calibration is used, and wherein the correction is performed with a correction resolution, which is higher than the predetermined overall resolution and lower or equal to the individual resolution to obtain corrected individual images or a corrected overall image; and
combining adjacent pixels of the corrected individual images and subsequent assembling of combined individual images or combining adjacent pixels of the corrected overall image to obtain the optical capture with the predetermined overall resolution.

## Revendications

1. Caméra de prise de vue optique d'un écran (10), l'écran présentant une face, et pour la prise de vue optique étant prévue une résolution totale prédéterminée, aux caractéristiques suivantes:
un porte-caméra (12) avec un réseau de fixations de caméra (14);
un réseau de caméras optiques individuelles (16), chaque caméra optique individuelle (16) étant placée de manière fixe sur une fixation de caméra associée (14), une caméra optique individuelle présentant un capteur de lumière (68) et un moyen de reproduction optique (66), le capteur de lumière (68) et le moyen de reproduction optique (66) étant opérationnels pour la prise de vue d'une face partielle (TF1) de la face d'écran avec une résolution individuelle qui est supérieure à la résolution totale; et
un moyen de traitement d'image (18) destiné à traiter des images numériques individuelles du réseau de caméras optiques individuelles (16), pour générer la prise de vue optique de l'écran avec une résolution totale prédéterminée,
le moyen de traitement d'image (18) étant opérationnel pour soumettre les images numériques individuelles à une correction, pour réduire les imprécisions d'orientation et/ou les oscillations de paramètre dans le réseau de caméras optiques individuelles (16), pour la correction étant utilisée une règle de correction (20) déterminée lors d'un étalonnage pour une image individuelle, et la correction ayant lieu à une résolution de correction qui est supérieure à la résolution totale prédéterminée et inférieure ou égale à la résolution individuelle, pour obtenir des images individuelles corrigées ou une image totale corrigée, et
pour combiner des pixels adjacents des images individuelles corrigées et pour assembler ensuite les images, ou pour combiner des pixels adjacents de l'image totale corrigée, pour obtenir la prise de vue optique avec la résolution totale prédéterminée.

2. Caméra selon la revendication 1, dans laquelle les caméras optiques individuelles (16) sont fixées au porte-caméra (12) de sorte que les distances entre les caméras individuelles (16) et l'écran (10) soient sensiblement constantes et ne varient que dans les limites d'une plage de tolérances.

3. Caméra selon la revendication 1 ou 2, dans laquelle les caméras individuelles (16) sont fixées à leurs fixations de caméra (14) associées de sorte qu'elles soient orientées mécaniquement entre elles en ce qui concerne une rotation d'un capteur de lumière autour d'un axe optique de la caméra individuelle présentant le capteur de lumière, de sorte qu'une droite s'étendant sur des faces partielles de la face d'écran en pixels individuels de la caméra individuelle qui reproduisent des faces individuelles soit reproduite sous forme de droites partielles parallèles.

4. Caméra selon la revendication 3, dans laquelle le moyen de traitement d'image est réalisé pour effectuer, comme règle de correction (20), un déplacement vertical et/ou horizontal des images individuelles des caméras individuelles l'une par rapport à l'autre et pour rejeter une zone de recouvrement (22) restante dans les images individuelles des caméras individuelles (16) adjacentes.

5. Caméra selon la revendication 1 ou 2, dans laquelle le moyen de traitement d'image (18) est réalisé pour effectuer, comme règle de correction, un déplacement vertical et/ou horizontal des images individuelles des caméras individuelles l'une par rapport à l'autre et une rotation des images individuelles l'une par rapport à l'autre, et pour rejeter une zone de recouvrement (23) restante des images individuelles de caméras individuelles adjacentes.

6. Caméra selon l'une des revendications précédentes, dans laquelle le moyen de traitement d'image (18) est réalisé pour corriger des réductions divergentes dans les dispositifs de reproduction optique (66) des caméras individuelles (16).

7. Caméra selon l'une des revendications précédentes,
dans laquelle le moyen de traitement d'image (18) est réalisé pour utiliser, comme règle de correction (20), un tableau de consultation, à une caméra individuelle étant associé un tableau de consultation propre, et dans le tableau de consultation étant associée, à une position de pixels de l'image individuelle avant la correction, une position de pixels de l'image individuelle après la la correction, pour provoquer une correction par translation, par rotation et/ou par échelonnement.

8. Caméra selon l'une des revendications précédentes, dans laquelle le dispositif de reproduction optique (66) d'une caméra individuelle (16) provoque une réduction d'un facteur qui est inférieur à 5.

9. Caméra selon l'une des revendications précédentes,
dans laquelle le nombre de pixels de la prise de vue optique est égal au nombre de pixels d'une face partielle, et
dans laquelle une image individuelle présente une résolution qui est sensiblement égale à la résolution totale multipliée par le nombre de caméras individuelles.

10. Caméra selon la revendication 9, dans laquelle la résolution d'une image individuelle est supérieure à 15 fois la résolution totale de la prise de vue optique et le nombre de caméras individuelles est supérieur à 15.

11. Caméra selon l'une des revendications précédentes, dans laquelle le capteur de lumière d'une caméra individuelle est un capteur CCD qui est opérationnel pour réduire de manière analogique, dans un mode de mise en casiers, une résolution maximale du capteur CCD en étapes de nombre entier à la résolution individuelle.

12. Caméra selon l'une des revendications précédentes, dans laquelle l'écran est un écran de scintillateur (10).

13. Caméra selon l'une des revendications précédentes,
dans lequel est disposé, entre l'écran (10) et le dispositif de reproduction optique (66), un disque protecteur absorbant les rayons X et optiquement transparent (64).

14. Caméra selon la revendication 13, dans laquelle le disque protecteur peut être chauffé (74) pendant ou après une irradiation par rayons X.

15. Caméra selon l'une des revendications précédentes, dans laquelle le moyen de traitement d'image (18) présente les caractéristiques suivantes:
une mémoire d'images propre (19) pour chaque caméra individuelle, le moyen de traitement d'image (18) étant opérationnel pour mémoriser une séquence d'images individuelles d'une caméra individuelle dans la mémoire d'images (19) de la caméra individuelle.

16. Caméra selon la revendication 15, dans laquelle chaque caméra individuelle présente, du côté de la sortie, un convertisseur A/N (70) dont la profondeur de conversion est supérieure à 8 bits.

17. Caméra selon l'une des revendications précédentes,
dans laquelle l'aménagement optique comprend une ou plusieurs lentilles, une optique à miroir, une optique à fibre ou une combinaison des aménagements optiques.

18. Procédé de prise de vue optique d'un écran, l'écran présentant une face, et pour la prise de vue optique étant prévue une résolution totale prédéterminée, aux étapes suivantes consistant à:
enregistrer l'écran au moyen d'un réseau de caméras optiques individuelles, chaque caméra optique individuelle étant placée de manière fixe sur une fixation de caméra, une caméra optique individuelle présentant un capteur de lumière (68) et un moyen de reproduction optique (66), le capteur de lumière (68) et le moyen de reproduction optique (66) étant opérationnels pour la prise de vue d'une face partielle de la face d'écran avec une résolution individuelle qui est supérieure à la résolution totale; et
traiter des images numériques individuelles du réseau de caméras optiques individuelles (16), pour générer la prise de vue optique de l'écran avec une résolution totale prédéterminée, l'étape de traitement présentant les sous-étapes suivantes consistant à:
corriger les images numériques individuelles, pour réduire les imprécisions d'orientation et/ou les oscillations de paramètre dans le réseau de caméras optiques individuelles (16), à l'étape de correction étant utilisée une règle de correction (20) déterminée lors d'un étalonnage pour une image individuelle, et la correction ayant lieu à une résolution de correction qui est supérieure à la résolution totale prédéterminée et inférieure ou égale à la résolution individuelle, pour obtenir des images individuelles corrigées ou une image totale corrigée, et
combiner des pixels adjacents des images individuelles corrigées et assembler ensuite les images individuelles combinées, ou combiner des pixels adjacents de l'image totale corrigée, pour obtenir la prise de vue optique avec la résolution totale prédéterminée.
